# EUROPÄISCHE PATENTANMELDUNG

(11) **EP 4 086 686 A1**
(43) Veröffentlichungstag der Anmeldung: **09.11.2022**
(21) Anmeldenummer: 21216369.5
(22) Anmeldetag: 21.12.2021
(51) Int. Cl.: G02B 21/00, G02B 27/32, G02B 21/36

(54) **MIKROSKOPIESYSTEM UND VERFAHREN ZUM BETREIBEN EINES MIKROSKOPIESYSTEMS**

(30) Priorität: 07.05.2021 EP 21172758; 07.05.2021 EP 21172759
(71) Anmelder: Carl Zeiss Meditec AG, 07745 Jena (DE)
(72) Erfinder: ERNSPERGER, Stefan, 73479 Ellwangen (DE); LITSCH, Dominik, 73614 Schorndorf (DE); RAAB, Andreas, 73491 Neuler (DE); ESSIG, Jonathan, 73431 Aalen (DE); KRIEG, Nathalie, 73434 Aalen (DE); MÜLLER, Andrè, 89552 Königsbronn (DE)
(74) Vertreter: Ramrath, Lukas

(57) **Zusammenfassung**

Die Erfindung betrifft ein Mikroskopiesystem und ein Verfahren zum Betreiben eines Mikroskopiesystems, umfassend mindestens eine Trackingkamera (30) zur Lageerfassung mindestens eines zu erfassenden Objekts, wobei das Mikroskopiesystem (1) weiter umfasst:
- mindestens eine Trackingbeleuchtungseinrichtung (27, 27a, 27b, 27c),
- mindestens eine Steuereinrichtung (7) zur Steuerung der mindestens einen Trackingbeleuchtungseinrichtung (27, 27a, 27b, 27c) und/oder der Trackingkamera (30),
wobei eine Beleuchtungsinformation durch Auswertung mindestens eines Abbilds der Trackingkamera (30) und/oder eine Lageinformation des Objekts relativ zu mindestens einer Beleuchtungseinrichtung (30, 32) und/oder ein Arbeitsabstand (D, D1, D2) bestimmbar ist, wobei die Beleuchtung durch die Trackingbeleuchtungseinrichtung (27, 27a, 27b, 27c) und/oder eine Bilderfassung durch die mindestens eine Trackingkamera (30) in Abhängigkeit der Beleuchtungsinformation und/oder in Abhängigkeit der Lageinformation des Objekts und/oder in Abhängigkeit des Arbeitsabstands (D, D1, D2) einstellbar ist.

## Beschreibung

Die Erfindung betrifft ein Mikroskopiesystem und ein Verfahren zum Betreiben eines Mikroskopiesystems.

Aus dem Stand der Technik bekannt sind Mikroskopiesysteme zur vergrößernden Darstellung von Untersuchungsobjekten, insbesondere in medizinischen Anwendungen. Solche Mikroskopiesysteme können insbesondere sogenannte Operationsmikroskope sein. Diese dienen u.a. zur vergrößernden Darstellung von Teilbereichen eines Körpers, um einem Chirurgen bei einem Eingriff eine bessere visuelle Orientierung zu ermöglichen. Operationsmikroskope sind in der Regel beweglich gehaltert, insbesondere an einem Stativ. Dies ermöglicht es einem Benutzer u.a., eine Lage, also eine Position und/oder Orientierung, des Mikroskops zu verändern, beispielsweise um einen Blickwinkel auf einen Untersuchungsbereich zu verändern oder um andere Untersuchungsbereiche zu betrachten.

Die DE 10 2018 206 406 B3 offenbart ein Mikroskopiesystem mit einer Lageerfassungseinrichtung zur Erfassung einer räumlichen Lage eines Targets, wobei die Lageerfassungseinrichtung das mindestens eine Target mit mindestens einem Markerelement und eine Bilderfassungseinrichtung zur optischen Erfassung des Targets umfasst. Ferner offenbart das Dokument, dass das Mikroskopiesystem eine Beleuchtungseinrichtung zur Beleuchtung des Targets umfassen kann. Die offenbarte Lageerfassungseinrichtung kann insbesondere zur Erfassung der Lage eines Instruments, beispielsweise eines medizinischen Instruments, genutzt werden, wenn das Target an dem Instrument befestigt ist. Eine derartige Lageerfassung kann wünschenswert sein, wenn z.B. eine aktuelle Lage des Instruments relativ zu präoperativ erzeugten Daten, beispielsweise MRT- oder CT-Volumendaten, angezeigt soll.

Weiter bekannt ist die US 9,827,054 B2. Diese offenbart das mechanisch assistierte Positionieren von medizinischen Instrumenten während medizinischer Anwendungen. Ebenfalls offenbart ist ein Mikroskop sowie eine Lageerfassung.

Weiter bekannt ist die nachveröffentlichte EP 21 172 758.1, die ein Mikroskopiesystem mit einer Einrichtung zur Bestimmung eines Arbeitsabstands offenbart, wobei die Lage eines beweglichen optischen Elements, dessen Lage zur Einstellung eines Erfassungsbereichs einer Trackingkamera einstellbar ist, in Abhängigkeit des Arbeitsabstands einstellbar ist. Weiter beschreibt die Druckschrift, dass eine Betriebsweise und/oder ein Beleuchtungsbereich von Trackingbeleuchtungseinrichtungen des Mikroskopiesystems in Abhängigkeit des Arbeitsabstands einstellbar ist/sind.

Weiter bekannt sind mikroskopexterne Lageerfassungseinrichtungen, die beispielsweise als separate Systeme in einem Operationssaal angeordnet sind. Beispielhaft erwähnt sei die unter der Bezeichnung Polaris Vega VT bekannte optische Lageerfassungseinrichtung der NDI (Northern Digital Inc.). Derartige Erfassungseinrichtungen benötigen extra Bauraum im Operationssaal. Auch problematisch bei derartigen Lageerfassungseinrichtung sind Verdeckungen, beispielsweise wenn sich ein Nutzer zwischen ein Target und die Bilderfassungseinrichtungen einer solchen Lageerfassungseinrichtung bewegt. Hierdurch wird ein Bewegungsbereich von medizinischem Personal eingeschränkt. Ebenfalls erfordert die Lageerfassung mit einer solchen Lageerfassungseinrichtung regelmäßig, ein Target mit mindestens einem Marker auch am Operationsmikroskop anzuordnen, um gewünschte Funktionalitäten bereitzustellen. Das Anbringen von zusätzlichen Targets am Operationsmikroskop erfordert bei einer Wartung in der Regel auch die Demontage solcher Targets, die dann nach der Wartung wieder montiert werden und eine erneute Kalibrierung der Lageerfassungseinrichtung notwendig machen. Ferner benötigen solche mikroskopexternen Lageerfassungseinrichtungen eine starke Beleuchtung, nämlich um Bereiche im Operationssaal auszuleuchten, damit alle interessierenden Targets, die z.B. am Patienten, an einem Instrument und am Mikroskopiesystem angeordnet sind, zuverlässig abgebildet werden können. Ebenfalls benötigen derartige Systeme hochauflösende Bilderfassungseinrichtungen sowie hohe Rechenleistungen zur Auswertung der Abbilder, die zur Lageerfassung notwendig ist. Weiter nachteilig bei derartigen Lageerfassungseinrichtungen ist eine zunehmende Ungenauigkeit bei großen Abständen zwischen einem Target und den Bilderfassungseinrichtungen.

Es stellt sich daher das technische Problem, ein Mikroskopiesystem sowie ein Verfahren zum Betreiben dieses Mikroskopiesystems zu schaffen, welche eine zuverlässige und genaue Lageerfassung ermöglichen und eine verbesserte Benutzungsqualität bereitstellen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Mikroskopiesystem. Das Mikroskopiesystem umfasst ein Mikroskop. Im Sinne dieser Erfindung bezeichnet ein Mikroskop eine Einrichtung zur vergrößernden visuellen Darstellung eines Untersuchungsobjekts. Das Mikroskop kann ein klassisches Lichtmikroskop sein, welches ein vergrößertes Abbild durch Ausnutzung optischer Effekte erzeugt, insbesondere durch Mittel zur Strahlführung und/oder -formung und/oder -lenkung, beispielsweise Linsen. Das Mikroskop kann aber auch ein Digitalmikroskop sein, wobei das von dem Mikroskop zu visualisierende Abbild mittels einer Bilderfassungseinrichtung erzeugt und auf einer entsprechenden Anzeigeeinrichtung, beispielsweise einem Display, zur Anzeige gebracht werden kann.

Das Mikroskop kann insbesondere mindestens ein Okular umfassen. Das Okular bezeichnet einen Teil des Mikroskops, durch den oder in den ein Benutzer schaut, um das vom Mikroskop erzeugte Abbild visuell zu erfassen. Mit anderen Worten bildet ein Okular eine augenseitige optische Schnittstelle des Mikroskops. Das Okular kann einen Teil eines Tubus bilden. Weiter kann das Mikroskop mindestens ein Objektiv oder ein Objektivsystem umfassen. Dieses Objektiv kann eine reelle optische Abbildung eines Untersuchungsobjektes erzeugen. Das Objektiv kann hierbei optische Elemente zur Strahlführung und/oder -formung und/oder -lenkung umfassen. Das Okular kann optisch mit dem Objektiv verbunden sein oder werden.

Weiter kann das Mikroskop einen Mikroskopkörper umfassen. Der Mikroskopkörper kann einen Strahlengang für die mikroskopische Abbildung aufweisen oder ausbilden. Der Mikroskopkörper kann hierbei weitere optische Elemente zur Strahlführung und/oder - formung und/oder -ablenkung umfassen. Das Objektiv kann in den Mikroskopkörper integriert oder an diesem befestigt sein, insbesondere lösbar. Hierbei kann das Objektiv ortsfest relativ zum Mikroskopkörper angeordnet sein. Weiter kann der Mikroskopkörper mindestens eine Befestigungsschnittstelle zur Befestigung, insbesondere zur lösbaren Befestigung, eines Tubus aufweisen oder ausbilden. Der Mikroskopkörper kann ein Gehäuse umfassen oder ausbilden oder in einem Gehäuse angeordnet sein.

Weiter kann das Mikroskopiesystem ein Stativ zur Halterung des Mikroskops umfassen. Das Mikroskop, insbesondere der Mikroskopkörper, kann somit an dem Stativ mechanisch befestigt sein. Das Stativ ist hierbei derart ausgebildet, dass es eine Bewegung des Mikroskops im Raum ermöglicht, insbesondere mit mindestens einem Freiheitsgrad, vorzugsweise mit sechs Freiheitsgraden, wobei ein Freiheitsgrad ein Translations- oder ein Rotationsfreiheitsgrad sein kann. Die Freiheitsgrade können sich hierbei auf ein Referenzkoordinatensystem beziehen. Eine Vertikalachse (z-Achse) dieses Referenzkoordinatensystems kann parallel zur Gravitationskraft und entgegengesetzt zu dieser orientiert sein. Eine Längsachse (x-Achse) des Referenzkoordinatensystems und eine Querachse (y-Achse) des Referenzkoordinatensystems können hierbei eine Ebene aufspannen, die senkrecht zur Vertikalachse orientiert ist. Weiter können auch die Längs- und die Querachse orthogonal zueinander orientiert sein.

Weiter kann das Stativ mindestens eine Antriebseinrichtung zur Bewegung des Mikroskops umfassen. Eine solche Antriebseinrichtung kann beispielsweise ein Servomotor sein. Selbstverständlich kann das Stativ auch Mittel zur Kraft-/ Momentenübertragung, z.B. Getriebeeinheiten, umfassen. Insbesondere ist es möglich, die mindestens eine Antriebseinrichtung derart anzusteuern, dass das Mikroskop eine gewünschte Bewegung und somit eine gewünschte Lageänderung im Raum ausführt oder eine gewünschte Lage, also eine Position und/oder Orientierung, im Raum einnimmt. Beispielsweise kann die mindestens eine Antriebseinrichtung derart angesteuert werden, dass eine optische Achse des Objektivs eine gewünschte Orientierung einnimmt. Weiter kann die mindestens eine Antriebseinrichtung derart angesteuert werden, dass ein Referenzpunkt des Mikroskops, z.B. ein Fokuspunkt, an einer gewünschten Position im Raum positioniert wird. Eine Soll-Lage kann hierbei von einem Benutzer oder einem anderen übergeordneten System vorgegeben werden. Verfahren zur Steuerung der mindestens einen Antriebseinrichtung in Abhängigkeit einer Soll-Lage und einer kinematischen Struktur des Stativs sind hierbei dem Fachmann bekannt.

Das Mikroskopiesystem umfasst eine Trackingkamera zur Lageerfassung mindestens eines zu erfassenden Objekts. Die Trackingkamera bezeichnet hierbei eine Bilderfassungseinrichtung zur Erfassung einer räumlichen Lage mindestens eines zu erfassenden Objekts. Die Bilderfassungseinrichtung dient zur Abbildung des zu erfassenden Objekts. Die Trackingkamera kann Teil einer Lageerfassungseinrichtung des Mikroskopiesystems sein. Weiter kann die Lageerfassungseinrichtung eine Auswerte- oder Recheneinrichtung umfassen, die durch Auswertung der von der Trackingkamera erzeugten Abbilder eine Lagebestimmung/-erfassung durchführen kann. Das zu erfassende Objekt kann insbesondere ein Marker bzw. Markerelement sein. Auch kann das zu erfassende Objekt ein Instrument sein. Das Instrument kann insbesondere ein medizinisches, weiter insbesondere ein chirurgisches, Instrument sein. Dies umfasst z.B. Instrumente wie Klemmen, Halter, Spritzen, Pinzetten, Löffel, Scheren, Skalpelle, Wundhaken, Zangen, Sauger, Kauter, aber auch Retraktoren, z.B. einen Gehirn-Retraktor. Das Instrument kann insbesondere ein von der Hand eines Benutzers führbares Instrument sein. Auch kann ein Instrument ein Operationssaal-Einrichtungsgegenstand wie z.B. ein Operationstisch oder eine Mayfield-Klemme sein. Es ist möglich, dass ein oder mehrere Markerelement(e) an einem Instrument angeordnet sind. Der Marker bzw. das Markerelement kann hierbei Teil eines Targets sein oder an einem Target befestigt sein. Das Target oder der Marker kann insbesondere an einem (medizinischen) Instrument befestigt sein. Weiter kann die Lageerfassungseinrichtung, insbesondere deren Auswerteeinrichtung, ein zu erfassendes Objekt identifizieren, insbesondere bildbasiert, also über Verfahren der Bildverarbeitung undauswertung, die dem Fachmann bekannt sind.

Die Trackingkamera umfasst einen Bildsensor, z.B. einen CCD- oder CMOS-Bildsensor. Eine Auflösung des Bildsensors kann beispielsweise 12 Megapixel betragen. Weiter kann die Trackingkamera ein optisches System mit mindestens einem optischen Element umfassen. Die Lageerfassung kann auch zur Lageverfolgung dienen, also der Bestimmung der Lage an mehreren aufeinanderfolgenden Zeitpunkten. Mittels der Trackingkamera kann insbesondere eine sogenannte monoskopische Lageerfassung erfolgen. Hierbei kann die Lage durch Auswertung eines zweidimensionalen Abbilds, insbesondere genau eines zweidimensionalen Abbilds, bestimmt werden. Die Trackingkamera kann Teil einer Lageerfassungseinrichtung sein, die zusätzlich zu der Trackingkamera auch eine Auswerteeinrichtung zur Bestimmung der Lage in einem vorbestimmten Referenzkoordinatensystem umfassen kann. Die Lage bezeichnet eine räumliche Position und/oder eine räumliche Orientierung in dem Referenzkoordinatensystem. Insbesondere kann zur Bestimmung der Lage eine Auswertung von Intensitätswerten von Pixeln des zweidimensionalen Abbilds durchgeführt werden. Solche Verfahren zur bildbasierten Lageerfassung mit genau einer Trackingkamera oder mehreren Trackingkameras sind dem Fachmann bekannt.

Erfindungsgemäß umfasst das Mikroskopiesystem mindestens eine, vorzugsweise jedoch mindestens zwei, Trackingbeleuchtungseinrichtung(en). Eine Trackingbeleuchtungseinrichtung bezeichnet eine Beleuchtungseinrichtung zur Be- oder Ausleuchtung eines Erfassungsbereichs der mindestens einen Trackingkamera.

Weiter kann das Mikroskopiesystem mindestens ein, insbesondere als Linse ausgebildetes, optisches Element zur Strahlführung der von der/den Trackingbeleuchtungseinrichtung(en) erzeugten Strahlung und mindestens eine Steuereinrichtung zur Steuerung der Trackingbeleuchtungseinrichtung und/oder zur Steuerung der Trackingkamera umfassen.

Eine Recheneinrichtung kann als Mikrocontroller oder integrierte Schaltung ausgebildet sein oder eine(n) solche(n) umfassen. Die Recheneinrichtung kann insbesondere durch eine Steuereinrichtung des Mikroskopiesystems ausgebildet werden oder Teil davon sein. Weiter kann das Mikroskopiesystem eine Recheneinrichtung zur Bildauswertung, zur Lagebestimmung und zur Einstellung der Beleuchtung umfassen.

Durch das mindestens eine optische Element kann also ein Beleuchtungsbereich festgelegt sein. Eine Trackingbeleuchtungseinrichtung kann insbesondere als LED ausgebildet sein. Eine Trackingbeleuchtungseinrichtung kann hierbei Licht im nahen Infrarotbereich, vorzugsweise in einem schmalbandigen Wellenlängenbereich, beispielsweise mit einer Wellenlänge von 850 nm oder mit einer Wellenlänge aus einem Bereich von 800 nm bis 900 nm, erzeugen. Insbesondere kann in einer solchen Ausführungsform das zu erfassende Objekt zumindest teilweise oder vollständig aus einem diese Strahlung reflektierenden Material ausgebildet sein.

Die Steuereinrichtung kann zur Steuerung einer Betriebsweise, insbesondere eines Aktivierungszustands und/oder einer Intensität der erzeugten Strahlung, und/oder zur Einstellung eines Beleuchtungsbereichs einer Trackingbeleuchtungseinrichtung dienen. Durch den Beleuchtungsbereich kann auch eine Beleuchtungsfläche, insbesondere deren Größe und/oder Form, eingestellt werden. Ein Aktivierungszustand kann hierbei beispielsweise "nicht aktiv" sein, wobei in diesem Zustand keine Strahlung von der Trackingbeleuchtungseinrichtung erzeugt wird. Ein weiterer Aktivierungszustand kann "aktiv" sein, wobei in diesem Aktivierungszustand Strahlung von der Trackingbeleuchtungseinrichtung erzeugt wird. Weiter kann die Intensität im aktiven Zustand eingestellt werden. Zur Einstellung eines Beleuchtungsbereichs kann ein Beleuchtungswinkel, eine Größe und/oder eine geometrische Form des Beleuchtungsbereichs eingestellt werden, beispielsweise durch Ansteuerung von mindestens einem oder mehreren optischen Element(en) zur Einstellung der genannten Größen. Es ist z.B. möglich, dass ein optisches Element zur Strahlführung der von einer Trackingbeleuchtungseinrichtung erzeugten Strahlung ein bewegliches und/oder verformbares optisches Element ist, wobei eine Lage und/oder eine Form dieses optischen Elements zur Einstellung verschiedener Beleuchtungsbereiche und/oder zur Einstellung verschiedener Beleuchtungszustände in verschiedenen räumlichen Bereichen verändert werden kann. Insbesondere kann ein solches optische Element ein entsprechend einem beweglichen optischen Element zum Einstellen des Erfassungsbereichs der Trackingkamera ausgebildetes Element sein. Der Beleuchtungswinkel kann ein Abstrahlwinkel der Beleuchtungseinrichtung sein. Dieser wiederum kann dem Öffnungswinkel eines kegelförmigen Beleuchtungsbereichs entsprechen.

Es kann somit also möglich sein, dass verschiedene räumliche Bereiche bereichsspezifisch, insbesondere unabhängig voneinander, beispielsweise mit verschiedenen Beleuchtungsparametern wie z.B. einer Intensität und/oder einem Beleuchtungswinkel, durch die Trackingbeleuchtungseinrichtungen beleuchtet werden können. Dies kann durch die Einstellung der Lage und/oder der Form mindestens eines optischen Elements, alternativ oder kumulativ aber auch durch die Steuerung der Betriebsweise und/oder Einstellung des Beleuchtungsbereichs erfolgen.

Erfindungsgemäß ist eine Beleuchtungsinformation durch Auswertung mindestens eines Abbilds der Trackingkamera bestimmbar bzw. wird bestimmt. Alternativ oder kumulativ ist eine Lageinformation des Objekts relativ zu mindestens einer Beleuchtungseinrichtung, also eine Information über eine Lage des Objekts relativ zur Beleuchtungseinrichtung, bestimmbar bzw. wird bestimmt. Diese Bestimmung kann durch die erläuterte Steuereinrichtung oder durch eine davon verschiedene Auswerteeinrichtung erfolgen, die aber ebenfalls als Recheneinrichtung ausgebildet sein kann. Weiter alternativ oder kumulativ ist ein Arbeitsabstand bestimmbar bzw. wird bestimmt. Dies wird nachfolgend noch näher erläutert.

Weiter erfindungsgemäß ist die Beleuchtung, mit anderen Worten ein Beleuchtungszustand, durch die mindestens eine Trackingsbeleuchtungseinrichtung und/oder die Bilderfassung, mit anderen Worten ein Bilderfassungszustand, durch die mindestens eine Trackingkamera in Abhängigkeit der Beleuchtungsinformation und/oder der Lageinformation des Objekts und/oder in Abhängigkeit des Arbeitsabstands einstellbar bzw. wird eingestellt. Die Beleuchtung ist hierbei z.B. durch die erläuterte Einstellung der Betriebsweise und/oder des Beleuchtungsbereich der mindestens einen Trackingbeleuchtungseinrichtung einstellbar, insbesondere über die Einstellung von Beleuchtungsparametern. Auch kann die Beleuchtung durch die Einstellung der Lage und/oder der Form eines erläuterten optischen Elements einstellbar sein. Die Bilderfassung ist insbesondere durch die Einstellung einer Betriebsweise der mindestens einen Trackingkamera, insbesondere über die Einstellung eines Bilderfassungsparameters wie einer Belichtungszeit, einstellbar.

Die Beleuchtungsinformation kann insbesondere eine Helligkeitsinformation sein, also eine Information über eine Helligkeit des Abbilds oder eines Teilbereichs des Abbilds. Die Information kann beispielsweise ein Helligkeitswert sein. Beispielsweise kann die Bildhelligkeit als Mittelwert der Pixelintensitäten im Abbild oder Teilbereich des Abbilds bestimmt werden. Eine Pixelintensität kann hierbei eine Grauwertintensität sein. Bei einem Farbbild kann die Bildhelligkeit beispielsweise als Mittelwert von Pixelintensitäten bestimmt werden, die die Helligkeit eines Pixels in einem Helligkeits-Farbigkeit-Modell repräsentieren, beispielsweise in dem YCbCr-Modell. Hierzu kann es notwendig sein, das Farbbild in eine Repräsentation gemäß des genannten Helligkeits-Farbigkeit-Modells zu transformieren. Auch kann die Helligkeit eines Pixels in Abhängigkeit der Intensität in jedem der Pixel zugeordneten Farbkanal bestimmt werden, beispielsweise als Mittelwert dieser farbkanalspezifischen Intensitäten.

Ist der Helligkeitswert z.B. größer als ein vorbestimmter Schwellwert, so kann die Beleuchtung derart verändert werden, dass der Helligkeitswert reduziert wird, beispielsweise durch Reduktion der Gesamtintensität der von der mindestens einen Trackingbeleuchtungseinrichtung erzeugten Strahlung. Ist der Helligkeitswert z.B. kleiner als ein (weiterer) vorbestimmter Schwellwert, so kann die Beleuchtung derart verändert werden, dass der Helligkeitswert erhöht wird, beispielsweise durch Erhöhung der Gesamtintensität der von der mindestens einen Trackingbeleuchtungseinrichtung erzeugten Strahlung. Alternativ oder kumulativ kann eine Belichtungszeit bei der Bilderfassung verlängert werden, insbesondere wenn die Gesamtintensität konstant bleibt. Ist der Helligkeitsbereich in einem bestimmten Teilbereich des Abbilds größer als ein vorbestimmter Schwellwert, so kann die Beleuchtung derart verändert werden, dass der Helligkeitswert in diesem Teilbereich verringert wird, außerhalb des Teilbereichs aber nicht oder in abweichender Weise verändert wird. Dies kann z.B. durch Verringerung der Intensität der von der mindestens einen Trackingbeleuchtungseinrichtung erzeugten Strahlung in dem Raumbereich, der in den Teilbereich des Abbilds abgebildet wird, erfolgen. Alternativ oder kumulativ kann eine Belichtungszeit bei der Bilderfassung verkürzt werden. Ist der Helligkeitsbereich in einem bestimmten Teilbereich des Abbilds kleiner als ein vorbestimmter Schwellwert, so kann die Beleuchtung derart verändert werden, dass der Helligkeitswert in diesem Teilbereich erhöht wird, außerhalb des Teilbereichs aber nicht oder in abweichender Weise verändert wird. Dies kann z.B. durch Erhöhung der Intensität der von der mindestens einen Trackingbeleuchtungseinrichtung erzeugten Strahlung in dem Raumbereich, der in den Teilbereich des Abbilds abgebildet wird, erfolgen. Insbesondere kann die Beleuchtung also derart eingestellt werden, dass der Helligkeitswert im gesamten Abbild oder aber in einem oder mehreren Teilbereichen in einem vorbestimmten Helligkeitswertintervall liegt. Hierzu kann eine unterschiedliche Beleuchtung in mehrere Raumbereichen eingestellt werden.

Die Beleuchtungsinformation kann alternativ oder kumulativ eine Information über ein Intensitätsmaximum oder über lokale Intensitätsmaxima und/oder über ein Intensitätsminimum oder über lokale Intensitätsminima im Abbild sein. Die Beleuchtung kann dann derart eingestellt werden, dass das Intensitätsminimum und das Intensitätsmaximum oder alle lokalen Intensitätsminima und alle lokalen Intensitätsmaxima in einem vorbestimmten Helligkeitswertintervall liegen. Dies ermöglicht die Verringerung der Auswirkungen von unerwünschten Reflexionen im Abbild.

Es ist insbesondere möglich, dass die Beleuchtungsinformation nur für (einen) Teilbereich(e) des Abbilds bestimmt wird, in den ein zu erfassendes Objekt abgebildet ist. Ein solcher Teilbereich kann über dem Fachmann bekannt Verfahren zur Objektidentifikation in Abbildern bestimmt werden. Dann kann die Beleuchtung derart eingestellt werden, dass der Helligkeitswert in dem/den derart bestimmten Teilbereich(en) in einem vorbestimmten Helligkeitswertintervall liegt, insbesondere in einem Intervall, der eine zuverlässige Bildauswertung zur Lagebestimmung, z.B. eine zuverlässige und genaue Detektion eines Referenzpunkts, beispielsweise eines Mittelpunkts, eines zu erfassenden Objekts, beispielsweise eines Markers, ermöglicht. Mit anderen Worten kann eine objektspezifische Idealbeleuchtung eingestellt werden.

Die Lageinformation des Objekts kann eine Information über die Lage eines Objekts relativ zu mindestens einer Beleuchtungseinrichtung sein, insbesondere relativ zu einer Trackingbeleuchtungseinrichtung oder zu einer nachfolgend noch erläuterten Sichtfeldbeleuchtungseinrichtung. Auch kann die Beleuchtungseinrichtung eine mikroskopexterne Beleuchtungseinrichtung sein, z.B. eine im OP-Saal installierte Beleuchtungseinrichtung. Die Lage der Beleuchtungseinrichtung kann vorbekannt sein oder durch ein Trackingsystem bestimmt werden. Es ist möglich, dass die Lageinformation des Objekts eine Information über einen Abstand zwischen Objekt und Beleuchtungseinrichtung ist, z.B. ein Abstandswert. Dann kann die Beleuchtung derart eingestellt werden, dass die Gesamtintensität der von der/den Trackingsbeleuchtungseinrichtung(en) erzeugten Strahlung mit zunehmendem Abstand von der Beleuchtungseinrichtung erhöht und mit abnehmendem Abstand von der Beleuchtungseinrichtung verringert wird. Alternativ oder kumulativ kann die Belichtungszeit mit zunehmendem Abstand erhöht und mit abnehmendem Abstand verringert werden, insbesondere wenn die Gesamtintensität konstant bleibt.

Es ist auch möglich, dass die Intensität im Raumbereich, in dem das Objekt angeordnet ist, mit zunehmendem Abstand von der Beleuchtungseinrichtung erhöht und mit abnehmendem Abstand von der Beleuchtungseinrichtung verringert werden, wobei die Intensität außerhalb des Raumbereichs nicht oder in anderer Weise verändert wird.

Befinden sich mehrere Objekte in unterschiedlichen Objektlagen im Beleuchtungsbereich der Trackingsbeleuchtungseinrichtung(en) und/oder im Erfassungsbereich der Trackingkamera, so kann die Beleuchtung derart eingestellt werden, dass für jedes Objekt eine objektlagenspezifische Beleuchtung erfolgt. Die Einstellung kann hierbei derart erfolgen, dass gleichzeitig mehrere oder jedes der Objekte objektlagenspezifisch beleuchtet werden. Befinden sich z.B. mehrere Objekte in unterschiedlichen Abständen von der Beleuchtungseinrichtung, so kann gleichzeitig jedes der Objekte mit einer abstandsspezifischen Intensität beleuchtet werden. In diesem Fall können, wie nachfolgend noch erläutert, räumliche Bereiche, die in verschiedene Teilbereiche des Abbilds abgebildet werden, verschieden, insbesondere mit verschiedenen Intensitäten, beleuchtet werden.

Es ist jedoch auch möglich, dass verschiedene Objekte einer Menge von mehreren Objekten sequentiell objektlagenspezifisch beleuchtet werden. Befinden sich z.B. mehrere Objekte mit unterschiedlichen Abständen von der Beleuchtungseinrichtung, so kann sequentiell jedes der Objekte mit einer abstandsspezifischen Intensität beleuchtet werden. Dann kann z.B. ein erstes Abbild unter einer ersten Beleuchtung erzeugt werden, welche an Objekte in einem ersten Abstandsbereich angepasst ist, wobei dann ein weiteres Abbild unter einer weiteren Beleuchtung erzeugt wird, welche an Objekte in einem weiteren Abstandsbereich angepasst ist, wobei die Abstandsbereiche voneinander verschieden sind. Sind Abstandswerte im ersten Abstandsbereich kleiner als die Abstandswerte im weiteren Abstandsbereich, so kann die Intensität der Strahlung bei der ersten Beleuchtung geringer sein als die Intensität der Strahlung bei der ersten Beleuchtung. Somit kann also eine hellere Beleuchtung für ein Fernfeldbild als die Beleuchtung für ein Nahfeldbild erfolgen.

Es ist weiter möglich, dass verschiedene Objekte einer Menge von mehreren Objekten sequentiell objektlagenspezifisch erfasst werden. Befinden sich z.B. mehrere Objekte mit unterschiedlichen Abständen von der Beleuchtungseinrichtung, so können sequentiell Abbilder mit einer abstandsspezifischen Belichtungszeit erzeugt werden. Mit anderen Worten kann z.B. ein erstes Abbild mit einer ersten Belichtungszeit erzeugt werden, welche an Objekte in einem ersten Abstandsbereich angepasst ist, wobei dann ein weiteres Abbild mit einer weiteren Belichtungszeit erzeugt wird, welche an Objekte in einem weiteren Abstandsbereich angepasst ist, wobei die Abstandsbereiche voneinander verschieden sind. Sind Abstandswerte im ersten Abstandsbereich kleiner als die Abstandswerte im weiteren Abstandsbereich, so kann die Belichtungszeit zur Erzeugung des ersten Abbilds geringer sein als die Belichtungszeit zur Erzeugung des weiteren Abbilds. Hierbei ist die Beleuchtungsintensität zur Erzeugung der Abbilder vorzugsweise konstant.

Es ist weiter möglich, dass der Beleuchtungseinrichtung ein Beleuchtungsbereich mit vorbekannter, beispielsweise durch eine Kalibrierung bestimmter, räumlicher Intensitätsverteilung zugeordnet ist. Dann kann die Lageinformation des Objekts eine Information über eine Lage in dem Beleuchtungsbereich sein. Weiter kann die Beleuchtung derart eingestellt werden, dass eine resultierende Intensität, die sich in Abhängigkeit, beispielsweise als Summe, der objektlagespezifischen Intensität, die von der Beleuchtungseinrichtung erzeugt und in Abhängigkeit der vorbekannten Intensitätsverteilung bestimmt wird, und der Intensität, die von den/der Trackingbeleuchtungseinrichtung(en) erzeugt wird, in einem vorbestimmten Intensitätsintervall liegt, beispielsweise in einem Intensitätsintervall, welches zu einem vorbestimmten Helligkeitsintervall bei der Abbildung korrespondiert. Mit anderen Worten kann durch das Einstellen der Beleuchtung eine gewünschte Beleuchtung eines Objekts unter Berücksichtigung vorbekannten räumlichen Intensitätsverteilung einer Beleuchtungseinrichtung erfolgen.

Die Bilderfassung, insbesondere ein Bilderfassungsparameter, kann insbesondere beleuchtungsspezifisch eingestellt werden. Z.B. kann die Einstellung der Beleuchtung zeitlich vor der Einstellung der Bilderfassung erfolgen, wobei dann in Abhängigkeit einer vorbekannten Zuordnung eines Bilderfassungsszenarios, beispielsweise einer Belichtungszeit, zu verschiedenen Beleuchtungsszenarien, die beleuchtungsszenariospezifische Bilderfassung eingestellt wird. Allerdings kann die Beleuchtung auch bilderfassungsspezifisch eingestellt werden, wobei z.B. in Abhängigkeit einer vorbekannten Zuordnung eines Beleuchtungsszenarios, beispielsweise einer zu verschiedenen Bilderfassungsszenarien, die bilderfassungsszenariospezifische Beleuchtung eingestellt wird. Selbstverständlich ist es aber auch möglich, dass Bilderfassung und Beleuchtung unabhängig voneinander eingestellt werden. Die Einstellung der Beleuchtung in Abhängigkeit der Beleuchtungsinformation und/oder der Lageinformation kann in Form einer Steuerung oder Regelung erfolgen. Durch diese Steuerung/Regelung kann das von der Trackingkamera erzeugte Abbild in die Beleuchtungseinstellung einbezogen werden. Insbesondere kann eine dynamische Einstellung der Beleuchtung erfolgen, also eine Einstellung zur Laufzeit. Somit kann sich die Beleuchtung verändern, wenn sich die Beleuchtungsinformation und/oder die Lageinformation des Objekts verändert.

Das vorgeschlagene Mikroskopiesystem ermöglicht in vorteilhafter Weise eine genaue und zuverlässige Lageerfassung eines zu erfassenden Objekts, dessen Lage bestimmt werden soll, durch die Trackingkamera. So kann insbesondere die Beleuchtung derart angepasst werden, dass eine zuverlässige und genaue Detektion des Objekts im Abbild und eine zuverlässige und genaue Auswertung der Bildinformationen zur Lagebestimmung erfolgen kann. Insbesondere ergibt sich in vorteilhafter Weise, dass eine Beleuchtung außerhalb eines Zielbereichs sowie Überbelichtungen und/oder Unterbelichtungen im Zielbereich vermieden werden können. Hierdurch können Energiekosten eingespart und eine unerwünschte Wärmeentwicklung vermieden werden. Auch wird die Erzeugung von Störlicht durch die Beleuchtung reduziert.

Weiter kann das Mikroskopiesystem mindestens eine Sichtfeldbeleuchtungseinrichtung umfassen. Die Sichtfeldbeleuchtungseinrichtung kann hierbei in oder an dem Mikroskopkörper angeordnet sein. Weiter ist die Sichtfeldbeleuchtungseinrichtung von der/den Trackingbeleuchtungseinrichtung(en) verschieden. Insbesondere kann ein Beleuchtungsbereich der Sichtfeldbeleuchtungseinrichtung größer als der größte, einstellbare Beleuchtungsbereich der Trackingbeleuchtungseinrichtung(en) sein. Ferner kann die Sichtfeldbeleuchtungseinrichtung Strahlung mit Wellenlängen aus einem Wellenlängenbereich erzeugen, die von den Wellenlängen aus dem Wellenlängenbereich der Strahlung der Trackingbeleuchtungseinrichtungen verschieden sind. Insbesondere können sich die Wellenlängenbereiche nicht oder nur in einem Teilbereich überschneiden.

Hierdurch ergibt sich in vorteilhafter Weise, dass die Beleuchtung zur Lageerfassung unabhängig von der Beleuchtung zur mikroskopischen Abbildung eingestellt werden kann, was eine Bedienqualität für einen Nutzer des Mikroskopiesystems verbessert.

Für die vorhergehend erläuterte Bestimmung des Arbeitsabstands zur erfindungsgemäßen Einstellung der Beleuchtung und/oder der Bilderfassung kann das Mikroskopiesystem mindestens eine Einrichtung zur Bestimmung eines Arbeitsabstands umfassen.

Dieser Arbeitsabstand des Mikroskops kann einen Abstand zwischen einer Schärfeebene und einem Abschlusselement eines Objektivsystems des Mikroskops entlang einer optischen Achse des Mikroskops bezeichnen, die durch das Objektiv bzw. Objektivsystem des Mikroskops festgelegt sein kann. Das Abschlusselement kann beispielsweise eine Linse (Frontlinse) des Objektivs/Objektivsystems oder eine transparente Abschlussscheibe sein. Die Schärfen- oder Detektionsebene kann eine Ebene im Objektraum bezeichnen, wobei ein Objekt in dieser Ebene mit einer gewünschten Schärfe abgebildet wird. Sie kann orthogonal zur optischen Achse des Mikroskops orientiert sein, die die Schärfenebene in der Mitte des Schärfentiefenbereichs schneidet. Der Schärfentiefenbereich ist in bekannter Weise abhängig von einer aktuell eingestellten Brennweite, der aktuell eingestellten Entfernung als auch der aktuell eingestellten Blendenöffnung. So ist es insbesondere möglich, die Schärfeebene und somit auch den Arbeitsabstand in Abhängigkeit mindestens einer der genannten Größen zu bestimmen. Selbstverständlich sind auch andere Verfahren zur Bestimmung des Arbeitsabstands denkbar. Es ist beispielsweise möglich, dass ein Arbeitsabstand des Mikroskops auf ein oder mehrere, aber nicht alle, Werte eines vorbestimmten Wertebereichs eingestellt werden kann, beispielsweise auf den Wert 100 mm, den Wert 200 mm und den Wert 630 mm.

Der Arbeitsabstand des Mikroskops kann über dem Fachmann bekannte Verfahren automatisiert bestimmt werden. So kann der Arbeitsabstand insbesondere dann bestimmt werden, wenn eine Lage eine Schärfenebene des Mikroskops durch einen Nutzer oder durch die Durchführung einer Autofokusfunktion eingestellt wurde, mit anderen Worten also ein scharfgestellter Zustand des Mikroskops eingestellt ist. Das Scharfstellen erfolgt insbesondere durch eine Einstellung von Parametern des Objektivs des Mikroskops, z.B. einer Lage von mindestens eines beweglichen optischen Elements dieses Objektivs. Die Autofokusfunktion kann beispielsweise durch eine Fokussiereinrichtung des Mikroskopiesystems durchgeführt werden. In diesem Zustand kann dann ein Arbeitsabstand in Abhängigkeit der eingestellten Parameter des Objektivs bestimmt werden, z.B. über eine vorbestimmte Zuordnung, eine vorbestimmte Kennlinie oder eine vorbestimmte Funktion, insbesondere eine Polynomfunktion. Beim Scharfstellen kann z.B. eine Bildweite eines Objektivs des Mikroskops eingestellt werden, wobei dieser Bildweite ein Arbeitsabstand zugeordnet sein bzw. aus einer eingestellten Bildweite ein Arbeitsabstand bestimmt werden kann. So kann z.B. angenommen werden, dass ein Abstand eines Objekts, insbesondere eines an einem Instrument angeordneten Markers, von der Trackingkamera des Mikroskopiesystems genau oder annähernd dem Arbeitsabstand des Mikroskops entspricht, insbesondere weil ein Chirurg z.B. ein Instrument, insbesondere mit einem solchen Marker, in der Regel auch in dem von dem Mikroskop scharf abgebildeten Bereich benutzt/bewegt.

Es ist auch möglich, dass das Mikroskopiesystem eine Einrichtung zur Bestimmung eines Arbeitsabstands der Trackingkamera umfasst, wobei dieser Arbeitsabstand vorzugsweise, aber nicht notwendigerweise zwingend, in Abhängigkeit des Arbeitsabstands des Mikroskops bestimmt wird, beispielsweise über eine vorbekannte Zuordnung. Durch die Zuordnung kann der Arbeitsabstand der Trackingkamera einem Arbeitsabstand oder einem Arbeitsabstandsbereich des Mikroskops zugeordnet sein. Der Arbeitsabstand der Trackingkamera kann einen Abstand zwischen einer Schärfeebene und einem Abschlusselement, z.B. einer (Front-)Linse eines Objektivsystems der Trackingkamera entlang einer optischen Achse der Trackingkamera bezeichnen, die durch das Objektiv bzw. Objektivsystem der Trackingkamera festgelegt sein kann. Es ist jedoch auch denkbar, den Arbeitsabstand der Trackingkamera unabhängig von dem Arbeitsabstand des Mikroskops zu bestimmen. Es weiter möglich, dass das Mikroskopiesystem eine Recheneinrichtung zur Bestimmung des Arbeitsabstands umfasst. Die Recheneinrichtung kann insbesondere durch eine Steuereinrichtung des Mikroskopiesystems ausgebildet werden oder Teil davon sein. Somit kann eine Betriebsweise der Trackingbeleuchtungseinrichtung(en) und/oder eine Bilderfassung durch die mindestens eine Trackingkamera auch in Abhängigkeit des Arbeitsabstands einstellbar sein. Es ist möglich, dass verschiedenen Arbeitsabständen oder -bereichen verschiedene Betriebsweisen der Trackingbeleuchtungseinrichtung(en) und/oder verschiedene Betriebsweisen der Trackingkamera zugeordnet sind, wobei dann durch die Steuereinrichtung die Betriebsweise der Trackingbeleuchtungseinrichtungen und/oder der Trackingkamera eingestellt wird, die dem aktuell bestimmten Arbeitsabstand der -bereich zugeordnet ist. Verschiedene Betriebsweisen der Trackingbeleuchtungseinrichtung können sich hierbei in einer Anzahl der aktivierten Trackingbeleuchtungseinrichtungen und/oder in der Intensität der von mindestens einer aktivierten Trackingbeleuchtungseinrichtung erzeugten Strahlung unterscheiden. Weiter alternativ oder kumulativ kann auch der Beleuchtungsbereich in Abhängigkeit des Arbeitsabstands einstellbar sein, insbesondere durch Einstellung der Betriebsweise der Trackingbeleuchtungseinrichtungen, aber auch durch Ansteuerung davon verschiedener Elemente zur Beeinflussung des Beleuchtungsbereichs. Verschiedene Betriebsweisen der Trackingkamera können sich z.B. durch voneinander verschiedene Belichtungszeiten unterscheiden.

Somit kann also eine Anzahl der aktivierten Trackingbeleuchtungseinrichtungen und/oder eine Intensität der aktivierten Trackingbeleuchtungseinrichtungen und/oder eine Betriebsweise der Trackingkamera in Abhängigkeit des Arbeitsabstands einstellbar sein. Hierdurch kann insbesondere eine Gesamtintensität der von der/den Trackingbeleuchtungseinrichtung(en) erzeugten Strahlung einstellbar sein. Die Einstellung kann hierbei - wie vorhergehend erläutert - zuordnungsbasiert erfolgen, wobei den verschiedenen Arbeitsabständen verschiedene Anzahlen von aktivierten Trackingbeleuchtungseinrichtungen und/oder verschiedene Intensitäten der aktivierten Trackingbeleuchtungseinrichtung(en) zugeordnet sind und eingestellt werden, wenn ein entsprechender Arbeitsabstand aktuell bestimmt wurde. Hierdurch ergibt sich in vorteilhafter Weise eine Anpassung der Beleuchtung an den Arbeitsabstand, wodurch insbesondere Überbelichtungen bei niedrigen Arbeitsabständen und Unterbelichtungen bei im Vergleich hohen Arbeitsabständen vermieden werden können.

Weiter kann für einen ersten Arbeitsabstand eine erste Gesamtintensität der von der/den Trackingbeleuchtungseinrichtung(en) erzeugten Strahlung eingestellt werden. Weiter wird für einen weiteren Arbeitsabstand eine weitere Gesamtintensität der von der/den Trackingbeleuchtungseinrichtung(en) erzeugten Strahlung eingestellt, wobei der erste Arbeitsabstand kleiner als der weitere Arbeitsabstand ist und die erste Gesamtintensität geringer als die weitere Gesamtintensität ist. Wie erläutert ist es möglich, die Gesamtintensität durch Einstellung der Anzahl aktivierter Beleuchtungseinrichtungen und/oder durch Einstellung der Intensität der aktivierten Beleuchtungseinrichtungen einzustellen. Es ist jedoch möglich, dass ein Aktivierungszustand der Trackingbeleuchtungseinrichtung, nicht aber die Intensität der im aktivierten Zustand erzeugten Strahlung einstellbar ist. Hierdurch ergibt sich in vorteilhafter Weise, dass für geringere Soll-Arbeitsabstände geringere Intensitäten der erzeugten Strahlung für im Vergleich größere Arbeitsabstände eingestellt werden können, wodurch das Risiko einer Überbelichtung bei niedrigen Arbeitsabständen und von Unterbelichtungen bei im Vergleich größeren Arbeitsabständen minimiert werden, was für eine zuverlässige und somit auch genaue Lageerfassung sorgt.

Es ist z.B. möglich, dass in Abhängigkeit des Arbeitsabstands eine Initial-Beleuchtung und/oder eine Initial-Bilderfassung eingestellt wird, also eine Beleuchtung mit initialen Beleuchtungsparametern und/oder eine Bilderfassung mit initialen Bilderfassungsparametern. Diese Initial-Beleuchtung und/oder Initial-Bilderfassung kann/können insbesondere unabhängig von der Beleuchtungsinformation und/oder der Lageinformation des Objekts bestimmt und eingestellt werden und dann - wie vorhergehend erläutert - in Abhängigkeit der Beleuchtungsinformation und/oder Lageinformation des Objekts verändert werden. Mit anderen Worten kann eine arbeitsabstandsabhängige Vorsteuerung der Beleuchtung und/oder Bilderfassung erfolgen. Diese ermöglicht in vorteilhafter Weise eine zeitlich schnelle und zuverlässige Beleuchtung bzw. Bilderfassung. Es ist aber auch möglich, dass zur Einstellung der Beleuchtung und/oder Bilderfassung der Arbeitsabstand und die Beleuchtungsinformation und/oder die Lageinformation des Objekts gleichzeitig berücksichtigt werden, wobei insbesondere nicht die arbeitsabstandsabhängige Vorsteuerung durchgeführt wird.

Durch die Einstellung der Beleuchtung und/oder der Bilderfassung in Abhängigkeit des Arbeitsabstands ergibt sich in vorteilhafter Weise eine genaue und zuverlässige Lageerfassung eines Objekts durch die Trackingkamera sowie gleichzeitig die Gewährleistung einer guten Bedienqualität.

In einer weiteren Ausführungsform ist durch Auswertung des mindestens einen Abbilds eine Überbelichtung und/oder eine Unterbelichtung des Abbilds oder eines Teilbereichs des Abbilds detektierbar, wobei die Beleuchtung und/oder die Bilderfassung derart einstellbar ist, dass die Überbelichtung oder die Unterbelichtung reduziert wird. Eine Überbelichtung kann detektiert werden, wenn ein Helligkeitswert im Abbild oder Teilbereich größer als ein vorbestimmter Schwellwert ist. Eine Überbelichtung eines Teilbereichs kann auch detektiert werden, wenn ein Verhältnis des Helligkeitswerts im Teilbereich zu einem Helligkeitswert des verbleibenden Teilbereichs oder des gesamten Abbilds größer als ein vorbestimmter Schwellwert ist. Eine Unterbelichtung kann detektiert werden, wenn ein Helligkeitswert im Abbild oder Teilbereich kleiner als ein vorbestimmter Schwellwert ist. Eine Unterbelichtung eines Teilbereichs kann auch detektiert werden, wenn ein Verhältnis des Helligkeitswerts im Teilbereich zu einem Helligkeitswert des verbleibenden Teilbereichs oder des gesamten Abbilds kleiner als ein vorbestimmter Schwellwert ist. Selbstverständlich sind jedoch auch andere Verfahren zur Detektion einer Überbelichtung oder Unterbelichtung im Abbild oder Teilbereich vorstellbar, beispielsweise histogrammbasierte Verfahren. Solche Verfahren sind dem Fachmann bekannt. Die Detektion der Überbelichtung oder Unterbelichtung kann, wie vorhergehend bereits erläutert, auch nur in Teilbereichen des Abbilds erfolgen, in den zu erfassende Objekte abgebildet sind. Die Beleuchtung und/oder die Bilderfassung kann dann derart eingestellt werden, dass die Überbelichtung oder die Unterbelichtung in diesen Teilbereichen reduziert wird. Hierbei kann eine Überbelichtung oder Unterbelichtung in weiteren Teilbereichen nicht oder nur in einem anderen Maß reduziert werden. Hierdurch wird in vorteilhafter Weise die Einstellung einer Beleuchtung bzw. Bilderfassung ermöglicht, bei der die Wahrscheinlichkeit für das Vorhandensein überbelichteter und/oder unterbelichteter Bereiche reduziert ist, was wiederum die Erzeugung von Abbildern ermöglicht, deren Auswertung eine zuverlässige und genaue Lagebestimmung ermöglicht.

In einer weiteren Ausführungsform ist durch Auswertung des mindestens einen Abbilds mindestens ein Teilbereich identifizierbar, in dem das bzw. ein zu erfassendes Objekt abgebildet ist, wobei die Beleuchtung und/oder die Bilderfassung derart einstellbar ist, dass das Objekt mit einer vorbestimmten Helligkeit abgebildet ist. Dies wurde vorhergehend bereits erläutert. Hierdurch ergibt sich in vorteilhafter Weise eine vereinfachte Einstellung der Beleuchtung bzw. Bilderfassung, da für Bildbereiche außerhalb der Bildbereiche, in die ein Objekt abgebildet ist, keine Helligkeitsvorgaben gelten.

In einer weiteren Ausführungsform ist die Lageinformation des Objekts eine Information über die Lage des bzw. eines zu erfassenden Objekts relativ zu mindestens einer Sichtfeldbeleuchtungseinrichtung mit einer vorbekannten Intensitätsverteilung in ihrem Beleuchtungsbereich, wobei die Beleuchtung und/oder die Bilderfassung zusätzlich in Abhängigkeit einer von der Sichtfeldbeleuchtungseinrichtung erzeugten lagespezifischen Intensität einstellbar ist. Die Sichtfeldbeleuchtungseinrichtung kann insbesondere eine inhomogene Intensitätsverteilung im Beleuchtungsbereich aufweisen. Dies wurde vorhergehend bereits erläutert. Hierdurch ergibt sich in vorteilhafter Weise eine zeitlich schnellere und vereinfachte Einstellung der Beleuchtung bzw. Bilderfassung, da bei der Einstellung bereits vorbekannte Informationen über die Beleuchtung durch die Sichtfeldbeleuchtungseinrichtung berücksichtigt werden.

In einer weiteren Ausführungsform werden räumliche Bereiche, die in verschiedene Teilbereiche des Abbilds abgebildet werden, verschieden beleuchtet, insbesondere mit verschiedenen Beleuchtungsparametern. Dies wurde vorhergehend bereits erläutert. Hierdurch wird in vorteilhafter Weise die Einstellung einer Beleuchtung ermöglicht, die die Erzeugung von Abbildern ermöglicht, deren Auswertung eine zuverlässige und genaue Lagebestimmung ermöglicht, was insbesondere aus der gezielten Beleuchtung resultiert.

In einer weiteren Ausführungsform werden verschiedene räumliche Bereiche, in denen verschiedene zu erfassende Objekte angeordnet sind und die in verschiedene Teilbereiche des Abbilds abgebildet werden, derart beleuchtet, dass jedes Objekt mit einer vorbestimmten Helligkeit abgebildet wird. Dies wurde vorhergehend bereits erläutert. Hierdurch ergibt sich in vorteilhafter Weise eine vereinfachte Einstellung der Beleuchtung bzw. Bilderfassung, da für räumliche Bereiche, in denen kein zu erfassendes Objekt angeordnet ist, keine Beleuchtungsvorgaben oder Vorgaben für die Bilderfassung gelten.

In einer weiteren Ausführungsform werden räumliche Bereiche, die in verschiedene Teilbereiche des Abbilds abgebildet werden, derart verschieden beleuchtet, dass die Differenz zwischen der in einem ersten räumlichen Bereich erzeugten resultierenden Intensität und der in einem weiteren räumlichen Bereich erzeugten resultierenden Intensität im Vergleich zu einer Differenz zwischen der von der Sichtfeldbeleuchtungseinrichtung im ersten räumlichen Bereich erzeugten Intensität und der von der Sichtfeldbeleuchtungseinrichtung im weiteren räumlichen Bereich erzeugten Intensität reduziert wird, wobei die resultierende Intensität, wie vorhergehend erläutert, in Abhängigkeit, beispielsweise als Summe, der Intensität, die von der Sichtfeldbeleuchtungseinrichtung erzeugt wird (und beispielsweise in Abhängigkeit der vorbekannten Intensitätsverteilung bestimmt werden kann) und der Intensität, die von den/der Trackingbeleuchtungseinrichtung(en) erzeugt wird, bestimmt wird. Mit anderen Worten kann also durch die Beleuchtung eine Kompensation der inhomogenen Beleuchtung erfolgen.

In einer weiteren Ausführungsform umfasst das Mikroskopiesystem mindestens ein bewegliches optisches Element, dessen Lage zur Einstellung eines Erfassungsbereichs der Trackingkamera veränderbar ist, wobei die Lage des beweglichen optischen Elements in Abhängigkeit des Arbeitsabstands einstellbar ist. In dieser Ausführungsform kann das Mikroskopiesystem insbesondere die vorhergehend erläuterte Einrichtung zur Bestimmung des Arbeitsabstands umfassen. Das bewegliche optische Element kann Teil des Objektivsystems der Trackingkamera sein. Insbesondere kann durch die Lageveränderung ein Bildwinkel der Trackingkamera verändert werden. Der Erfassungsbereich kann hierbei z.B. kegelförmig ausgebildet sein. Durch die Bewegung des optischen Elements kann auch die Lage eines Brennpunkts des optischen Elements bzw. eines das optische Element umfassenden Objektivsystems verändert werden. Weiter umfasst das Mikroskopiesystem mindestens eine Steuereinrichtung zur Steuerung des beweglichen optischen Elements, insbesondere zur Bewegungssteuerung. Durch diese Steuereinrichtung kann insbesondere eine Bewegung des beweglichen optischen Elements in eine gewünschte Lage gesteuert werden. Diese Steuereinrichtung kann die Steuereinrichtung zur Steuerung der Trackingbeleuchtungseinrichtungen oder von dieser verschieden sein.

Weiter ist die Lage des beweglichen optischen Elements in Abhängigkeit des Arbeitsabstands einstellbar. Beispielsweise können verschiedenen Arbeitsabständen oder verschiedenen Arbeitsabstandsbereichen jeweils verschiedene Lagen des beweglichen optischen Elements zugeordnet sein, wobei für einen Arbeitsabstand die Lage eingestellt wird, die diesem Arbeitsabstand oder dem Bereich, in dem der Arbeitsabstand liegt, zugeordnet ist. Z.B. kann die Zuordnung eines Arbeitsabstands zu einer Lage durch ein Kalibrierverfahren bestimmt werden. Auch ist es vorstellbar, dass ein funktioneller Zusammenhang zwischen der Lage und dem Arbeitsabstand besteht, wobei die Lage dann durch Auswertung des Zusammenhangs ermittelt werden kann. Die verschiedenen einstellbaren Lagen des beweglichen optischen Elements legen verschiedene Erfassungsbereiche, insbesondere Erfassungsbereiche mit voneinander verschiedenen Erfassungswinkeln, fest. Somit legen diese Lagen auch verschiedene Schärfenebenen der Trackingkamera fest.

In einer weiteren Ausführungsform wird ein zweiter Erfassungsbereich der Trackingkamera und/oder ein zweiter Beleuchtungszustand und/oder ein zweiter Bilderfassungszustand, insbesondere aus einem ersten Erfassungsbereich, einem ersten Beleuchtungszustand bzw. einem ersten Bilderfassungszustand heraus, eingestellt, wenn sich der Arbeitsabstand vergrößert und einen ersten vorbestimmten Schwellwert erreicht. Weiter wird ein erster Erfassungsbereich und/oder ein erster Beleuchtungszustand und/oder ein erster Bilderfassungszustand, insbesondere aus dem zweiten Erfassungsbereich, dem zweiten Beleuchtungszustand bzw. dem zweiten Bilderfassungszustand heraus, eingestellt, wenn sich der Arbeitsabstand verringert und einen zweiten vorbestimmten Schwellwert erreicht, der kleiner als der erste Schwellwert ist. Der zweite Erfassungsbereich kann eingestellt werden, indem das bewegliche optische Element, insbesondere aus einer ersten Lage heraus, in eine zweite Lage bewegt wird. Der erste Erfassungsbereich kann eingestellt werden, indem das bewegliche optische Element, insbesondere aus der zweiten Lage heraus, in die erste Lage bewegt wird. Die Lagen des optischen Elements sind hierbei voneinander verschieden und können auch als Stellungen bezeichnet werden. Der erste Erfassungsbereich kann einen ersten Erfassungswinkel aufweisen, der größer als der zweite Erfassungswinkel des zweiten Erfassungsbereichs ist. Mit anderen Worten wird ein erster Erfassungsbereich und/oder ein erster Beleuchtungszustand und/oder ein erster Bilderfassungszustand eingestellt, wenn sich der Arbeitsabstand verringert und einen zweiten vorbestimmten Schwellwert erreicht. Ein zweiter Erfassungsbereich, insbesondere ein zweiter Erfassungswinkel, und/oder ein zweiter Beleuchtungszustand und/oder Bilderfassungszustand wird eingestellt, wenn sich der Arbeitsabstand vergrößert und einen ersten vorbestimmten Schwellwert erreicht. Die Einstellung in Abhängigkeit des Arbeitsabstands ist somit hysteresebehaftet. Dies ermöglicht in vorteilhafter Weise einer verbesserte Bedienqualität für einen Nutzer des Mikroskopiesystems, insbesondere da das Risiko eines häufigen Änderns des Erfassungsbereichs, des Beleuchtungszustands und/oder des Bilderfassungszustands bei Änderungen des Arbeitsabstands um einen Arbeitspunkt herum, die vom Nutzer als irritierend empfunden werden kann, reduziert wird. Auch ermöglicht die hysteresebehaftete Einstellung der Beleuchtung und/oder der Bilderfassung in Abhängigkeit des Arbeitsabstands in vorteilhafter Weise eine genaue und zuverlässige Lageerfassung eines Objekts durch die Trackingkamera, da ein die Zuverlässigkeit und Genauigkeit in negativer Weise beeinflussendes häufiges Umschalten bei einem Arbeitsabstand, der sich um einen Schwellwert herum verändert, vermieden wird.

Die Einstellung eines Beleuchtungszustands kann die Einstellung mindestens eines Beleuchtungsparameters bezeichnen. Entsprechend kann die Einstellung eines Bilderfassungszustands die Einstellung mindestens eines Bilderfassungsparameters bezeichnen.

Vorzugsweise werden die Schwellwerte derart gewählt, dass die bis zum Erreichen der Schwellwerte eingestellten Erfassungsbereiche eine Abbildung mit ausreichend hoher Auflösung ermöglichen. Der beschriebene Aspekt kann eine unabhängige Erfindung darstellen. Somit wird ein Mikroskopiesystem beschrieben, umfassend mindestens eine Trackingkamera zur Lageerfassung mindestens eines zu erfassenden Objekts und mindestens eine Einrichtung zur Bestimmung eines Arbeitsabstands, weiter umfassend mindestens eine Trackingbeleuchtungseinrichtung und mindestens ein optisches Element zur Strahlführung der von den Trackingbeleuchtungseinrichtungen erzeugten Strahlung und/oder mindestens ein bewegliches optisches Element, dessen Lage zur Einstellung eines Erfassungsbereichs der Trackingkamera veränderbar ist, wobei ein zweiter Erfassungsbereich und/oder ein zweiter Beleuchtungszustand und/oder ein zweiter Bilderfassungszustand eingestellt wird, wenn sich der Arbeitsabstand vergrößert und einen ersten vorbestimmten Schwellwert erreicht und wobei das bewegliche optische Element von der zweiten in die erste Lage bewegt und/oder ein erster Beleuchtungszustand und/oder ein erster Bilderfassungszustand eingestellt wird, wenn sich der Arbeitsabstand verringert und einen zweiten vorbestimmten Schwellwert erreicht, der kleiner als der erste Schwellwert ist. Dieses Mikroskopiesystem kann hierbei zusätzlich gemäß einem oder mehrerer der in dieser Offenbarung angeführten Aspekte weitergebildet sein.

In einer weiteren Ausführungsform sind genau zwei Lagen des beweglichen optischen Elements wiederholgenau, also mit einer vorbestimmten Wiederholgenauigkeit, einstellbar. Die Wiederholgenauigkeit repräsentiert die Größe einer maximalen Lageabweichung, die sich beim mehrfachen Bewegen des optischen Elements in eine bestimmte Lage einstellen. Diese Wiederholgenauigkeit kann beispielsweise als Standardabweichung der Lagenabweichungen bei einer Vielzahl von, beispielsweise bei mehr als 100, wiederholten Positionierungen in der Lage bestimmt werden. Vorzugsweise ist die Wiederholgenauigkeit kleiner als oder gleich 1 µm bzw. 1°. Mit anderen Worten kann ein derart ausgebildetes Mikroskopiesystem also wiederholgenau zwei Erfassungsbereiche einstellen. Hierdurch ergibt sich in vorteilhafter Weise eine mechanisch einfache Ausbildung des Mikroskopiesystems, wobei jedoch gleichzeitig eine zuverlässige und genaue Lageerfassung ermöglicht wird.

In einer weiteren Ausführungsform ist das bewegliche optische Element beweglich, vorzugsweise linearbeweglich, zwischen zwei Endanschlagelementen gelagert, wobei ein erstes Endanschlagelement ein erstes Lagerelement zur statischen Lagerung und ein weiteres Endanschlagelement ein weiteres Lagerelement zur statischen Lagerung aufweist oder ausbildet, wobei die Lagerelemente die Anschlaglagen des optischen Elements wiederholgenau festlegen. Weiter kann Wiederholgenauigkeit einer Bewegungslage des optischen Elements geringer als die Wiederholgenauigkeit in einer Anschlaglage. Die Bewegungslage kann insbesondere eine Lage zwischen den beiden Anschlaglagen sein. Dass die Genauigkeit geringer ist, kann bedeuten, dass der Wert der Wiederholgenauigkeit größer ist als der Wert der Wiederholgenauigkeit in einer Anschlaglage, beispielsweise um das Zehnfache. Mit anderen Worten ist eine Bewegungslage des optischen Elements durch das Bewegungslageelement nicht in der gleichen Weise wiederholgenau festgelegt wie eine Anschlaglage durch das erste und das weitere Lagerelement. Hierdurch ergibt sich in vorteilhafter Weise eine einfache und kostengünstige Ausbildung des optischen Systems, insbesondere da keine hochpräzise Fertigung des Bewegungslagerelements und gegebenenfalls der durch dieses Element bereitgestellten Führungselemente erfolgen muss.

In einer weiteren Ausführungsform wird für einen ersten Arbeitsabstand ein erster Erfassungswinkel der Trackingkamera und für mindestens einen weiteren Arbeitsabstand ein weiterer Erfassungswinkel der Trackingkamera eingestellt, wobei der erste Arbeitsabstand kleiner als der weitere Arbeitsabstand ist und der erste Erfassungswinkel größer als der weitere Erfassungswinkel ist. Der Erfassungswinkel kann hierbei einen Bildwinkel der Trackingkamera bezeichnen, insbesondere einen horizontalen Bildwinkel, vertikalen Bildwinkel oder diagonalen Bildwinkel. Somit kann die Dimension einer Schnittfläche des Erfassungsbereichs mit einer Ebene, die die optische Achse der Trackingkamera im ersten Arbeitsabstand schneidet, beispielsweise orthogonal schneidet, für den ersten Erfassungswinkel größer sein als für den weiteren Erfassungswinkel. Hierdurch wird jedoch wiederum sichergestellt, dass auch Objekte, die mit dem weiteren Arbeitsabstand von dem Abschlusselement der Trackingkamera beabstandet sind, mit einer ausreichend hohen Auflösung erfasst werden können.

In einer weiteren Ausführungsform umfasst das Mikroskopiesystem mehrere Gruppen von Trackingbeleuchtungseinrichtungen, wobei eine Gruppe mindestens eine, vorzugsweise aber mehr als eine, Trackingbeleuchtungseinrichtung umfasst. Eine Gruppe kann beispielsweise ein sogenanntes Array von Trackingbeleuchtungseinrichtungen umfassen. Weiter umfasst das Mikroskopiesystem mindestens zwei optische Elemente zur Strahlführung, die verschiedenen Gruppen zugeordnet sind. Dies kann bedeuten, dass durch die von (der) Trackingbeleuchtungseinrichtung(en) dieser Gruppe erzeugte Strahlung durch das der Gruppe zugeordnete optische Element geführt wird werden. Beispielsweise kann ein erstes optisches Element einer ersten Gruppe und ein weiteres optisches Element einer weiteren Gruppe von Trackingbeleuchtungseinrichtungen zugeordnet sein. Hierbei kann mindestens eine Trackingbeleuchtungseinrichtung einer Gruppe nicht Bestandteil einer weiteren Gruppe sein. Vorzugsweise ist keine der Trackingbeleuchtungseinrichtungen einer Gruppe Bestandteil einer weiteren Gruppe von Trackingbeleuchtungseinrichtungen. Es ist möglich, dass ein optisches Element mehreren Gruppen von Trackingbeleuchtungseinrichtungen zugeordnet ist. In diesem Fall unterscheiden sich die verschiedenen optischen Elemente zur Strahlführung in mindestens einer zugeordneten Gruppe von Trackingbeleuchtungseinrichtungen. Es ist möglich, dass die verschiedenen Beleuchtungseinrichtungen einer Gruppe in einer Reihe entlang einer gemeinsamen Geraden oder matrixartig angeordnet sind. Hierbei kann jede der Beleuchtungseinrichtungen einer Gruppe individuell angesteuert werden, beispielsweise um einen Aktivierungszustand und/oder eine Intensität der erzeugten Strahlung einzustellen. Weiter ist es möglich, dass die Beleuchtungseinrichtungen auf einem wärmeleitfähigen Träger angeordnet sind, der thermisch mit einer Kühleinrichtung zur verbesserten Wärmeableitung verbunden ist. Hierdurch ergibt sich in vorteilhafter Weise, dass in einfacher Weise ein Beleuchtungsbereich, insbesondere arbeitsabstandsabhängig, eingestellt werden kann. So können durch die (verschiedenen) optischen Eigenschaften der optischen Elemente verschiedene Beleuchtungsbereiche oder -zustände festgelegt sein, wobei der entsprechend festgelegte Beleuchtungsbereich bei Aktivierung der Trackingbeleuchtungseinrichtungen der dem optischen Element zugeordneten Gruppe ausgeleuchtet wird, insbesondere mit einer vorbestimmten Intensität. Voneinander verschiedene Beleuchtungsbereiche können sich in der Lage, Form, Größe oder von in einer weiteren Eigenschaft unterscheiden. Durch die Anpassung des Beleuchtungsbereichs, insbesondere an den Arbeitsabstand, kann in vorteilhafter Weise das Risiko der Unter- oder Überbelichtung weiter verringert werden. Hierdurch wiederum kann die Qualität der Lageerfassung in vorteilhafter Weise verbessert werden, da eine Unter- oder Überbelichtung zu einer ungenauen und somit nicht zuverlässigen Lageerfassung bzw. zu einer nicht durchführbaren Lageerfassung führen kann.

Ebenfalls kann in vorteilhafter Weise eine unnötige Beleuchtung von Bereichen, die für die Lageerfassung nicht interessant sind, vermieden werden, was einerseits in vorteilhafter Weise einen Energiebedarf zur Lageerfassung reduziert und andererseits in vorteilhafter Weise unerwünschtes Streulicht reduziert, was sich auf die Funktionsweise weiterer Systeme auswirken kann. Insbesondere kann somit die vorhergehend erläuterte bereichsspezifische Beleuchtung in einfacher und zuverlässiger Weise ermöglicht werden.

Weiter können mindestens zwei der Vielzahl von optischen Elementen zur Strahlführung voneinander verschiedene optische Eigenschaften aufweisen. Die optischen Eigenschaften können insbesondere derart gewählt sein, dass durch die optischen Elemente bei Aktivierung von einer oder mehreren Gruppen voneinander verschiedene Beleuchtungsbereiche, insbesondere in einer Schnittebene senkrecht zur optischen Achse mindestens eines Elements, eingestellt werden. Hierdurch ergibt sich in vorteilhafter Weise eine einfach realisierbare Anpassung des Beleuchtungsbereichs, insbesondere an den Arbeitsabstand, insbesondere über verbaute, statische optische Elemente, was eine Anpassung ohne eine komplizierte Veränderung von optischen Eigenschaften ermöglicht. Selbstverständlich ist es aber auch möglich, dass die verschiedenen optischen Elemente gleiche optische Eigenschaften aufweisen. Weiter kann der durch die optischen Eigenschaften eines ersten optischen Elements festgelegte Beleuchtungswinkel des Beleuchtungsbereichs größer als der durch die optischen Eigenschaften eines weiteren optischen Elements festgelegte Beleuchtungswinkel des Beleuchtungsbereichs sein. Ist das erste optische Element einer ersten Gruppe von Trackingbeleuchtungseinrichtungen zugeordnet, so können diese aktiviert werden, wenn ein erster Arbeitsabstand bestimmt wird, wobei der erste Arbeitsabstand kleiner als ein weiterer Arbeitsabstand ist, wobei bei Bestimmung des Weiteren Arbeitsabstands die Trackingbeleuchtungseinrichtungen einer weiteren Gruppe aktiviert werden, der das weitere optische Element zugeordnet ist. Mit anderen Worten kann somit für im Vergleich kürzere Arbeitsabstände ein größerer Beleuchtungswinkel des Beleuchtungsbereichs eingestellt werden, wodurch sich einerseits eine Anpassung der Beleuchtungswinkel an die Erfassungswinkel ergibt, andererseits aber auch die unerwünschte Lichtstreuung reduziert werden kann. Insbesondere können die Beleuchtungswinkel der, insbesondere arbeitsabstandsabhängigen, Beleuchtungsbereiche gleich den Erfassungswinkeln in den, insbesondere arbeitsabstandsspezifischen, Erfassungsbereichen entsprechen oder maximal um ein vorbestimmtes Maß größer als diese sein. Weiter können sich die optischen Achsen der optischen Elemente zur Strahlführung in einem gemeinsamen Punkt schneiden. Hierdurch ergibt sich in vorteilhafter Weise, dass ein Beleuchtungsbereich durch Aktivierung mehrerer Gruppen geschaffen wird, deren Strahlungen sich effektiv zu einer resultierenden Strahlung überlagern. Es ist aber auch möglich, dass optische Achsen der Beleuchtungseinrichtungen voneinander verschieden orientiert oder angeordnet sind und sich nicht in einem gemeinsamen Punkt schneiden. Weiter können die Trackingbeleuchtungseinrichtungen gepulst betrieben werden, insbesondere mit einem vorbestimmten Tastgrad. Dieser Tastgrad kann ein Beleuchtungsparameter sein. In diesem Fall kann eine Trackingbeleuchtungseinrichtung für eine vorbestimmte Zeitdauer aktiviert und für eine vorbestimmte weitere Zeitdauer deaktiviert werden, wobei die Summe der Zeitdauern gleich einer Periodendauer ist. Weiter wird die Zeitdauer eines aktivierten Zustands (und somit auch der erläuterte Tastgrad) an einen Belichtungszeitraum der Trackingkamera angepasst. Die Belichtungszeitdauer kann hierbei von einem übergeordneten System bestimmt werden, beispielsweise von einer Kameraregeleinrichtung. Diese Kameraregeleinrichtung kann ebenfalls Bestandteil des Mikroskopiesystems sein und z.B. mit der Steuereinrichtung über eine Signalverbindung verbunden sein. Auch kann die Belichtungszeitdauer, wie vorhergehend erläutert, abhängig von einer Beleuchtungsinformation und/oder eine Lageinformation des Objekts und/oder einem Arbeitsstand bestimmt werden. Hierdurch ergibt sich in vorteilhafter Weise, dass die vorhergehend erläuterte Streulichterzeugung weiter reduziert wird, insbesondere da in Zeitabschnitten, in denen keine Bilderzeugung zur Lageerfassung erfolgt, auch keine Beleuchtung vorgenommen wird. Dies reduziert ebenfalls den Energiebedarf des Mikroskopiesystems.

Weiter kann das Mikroskopiesystem einen Strahlengang zur Erzeugung des mikroskopischen Abbilds umfassen oder diesen ausbilden. Dieser Strahlengang kann insbesondere der Strahlengang eines Objektivs des Mikroskops sein und/oder vom Mikroskopkörper ausgebildet werden. Das mikroskopische Abbild bezeichnet hierbei das vergrößerte Abbild eines Untersuchungsbereichs. Weiter umfasst das Mikroskopiesystem mindestens einen weiteren Strahlengang zur Erzeugung des Trackingabbilds oder bildet diesen aus, wobei die Strahlengänge voneinander verschieden sind. Der Strahlengang kann insbesondere der Strahlengang eines Objektivsystems der Trackingkamera sein und/oder vom Mikroskopkörper ausgebildet werden. Beispielsweise können die verschiedenen Strahlengänge durch Wandelemente und/oder Stegelemente voneinander getrennt sein. Diese Elemente können vom Mikroskopkörper ausgebildet werden.

Auch kann das Mikroskopiesystem optische Elemente zur Erzeugung der Abbilder umfassen, welche im oder am jeweiligen Strahlengang angeordnet sind. In verschiedenen Strahlengängen angeordnete optische Elemente können voneinander verschieden sein. Es ist möglich, dass ein Bauteil mit dem beweglichen optischen Element und/oder der/den Trackingbeleuchtungseinrichtung(en) und den optischen Elementen zur Strahlführung lösbar an dem Mikroskopkörper befestigt ist. Mit anderen Worten kann somit eine Nachrüstung einer Lageerfassungsfunktionalität erfolgen. Das Bauteil kann auch die Steuereinrichtung umfassen. In diesem Fall sind dann entsprechende Signalleitungen und Verbindungen zur Energieversorgung zwischen dem Bauteil und dem Mikroskopiesystem herzustellen. Allerdings ist es auch möglich, dass die genannten Komponenten des Bauteils oder zumindest ein Teil davon in den Mikroskopkörper integriert sind. Hierdurch ergibt sich eine platzsparende Bereitstellung einer zuverlässigen und genauen Lageerfassung, wobei jedoch ebenfalls eine qualitativ hochwertige Vergrößerung gewährleistet wird, da durch die verschiedenen Strahlengänge keine Beeinflussung der mikroskopischen Abbildung oder der Trackingabbildung erfolgt.

Weiter vorgeschlagen wird ein Verfahren zum Betreiben eines Mikroskopiesystems. Das Mikroskopiesystem kann hierbei gemäß einer der in dieser Offenbarung beschriebenen Ausführungsformen ausgebildet sein. Das Verfahren umfasst:
- das Bestimmen einer Beleuchtungsinformation durch Auswertung mindestens eines Abbilds der Trackingkamera und/oder einer Lageinformation des Objekts relativ zu mindestens einer Beleuchtungseinrichtung und/oder eines Arbeitsabstands,
- das Einstellen der Beleuchtung durch die
   Trackingsbeleuchtungseinrichtungen und/oder der Bilderfassung durch die mindestens eine Trackingkamera in Abhängigkeit der Beleuchtungsinformation und/oder der Lageinformation des Objekts und/oder in Abhängigkeit des Arbeitsabstands.

Das Verfahren ermöglicht, wie vorhergehend erläutert, das Einstellen der Beleuchtung und/oder der Bilderfassung derart, dass die von der Trackingkamera unter der eingestellten Beleuchtung und mit der eingestellten Bilderfassung eine zuverlässige und genaue Bestimmung der Lage des Objekts ermöglichen. Das Verfahren ist hierbei mit einem Mikroskopiesystem gemäß einer der in dieser Offenbarung beschriebenen Ausführungsformen durchführbar. Somit ist auch das Mikroskopiesystem zur Durchführung des Verfahrens ausgeführt.

Insbesondere kann also das Verfahren umfassen:
- das Bestimmen eines Arbeitsabstands,
- das Einstellen der Beleuchtung durch die
Trackingsbeleuchtungseinrichtungen und/oder der Bilderfassung durch die mindestens eine Trackingkamera in Abhängigkeit des Arbeitsabstands.

Dies und entsprechende Vorteile wurden vorhergehend bereits erläutert.

In einer weiteren Ausführungsform, aber auch unabhängig von den vorhergehend angeführten Verfahrensschritten, kann das/ein Verfahren umfassen:
- Einstellen eines zweiten Erfassungsbereichs der Trackingkamera, insbesondere durch Bewegen des beweglichen optischen Elements von einer ersten in eine zweite Lage, und/oder Einstellen eines zweiten Beleuchtungszustands und/oder eines zweiten Bilderfassungszustands, wenn sich der Arbeitsabstand vergrößert und einen ersten vorbestimmten Schwellwert erreicht, insbesondere aus einem Zustand mit eingestelltem ersten Erfassungsbereich, aus einem eingestellten ersten Beleuchtungszustand und/oder aus einem ersten Bilderfassungszustand heraus,
- Einstellen eines ersten Erfassungsbereichs der Trackingkamera, insbesondere durch Bewegen des beweglichen optischen Elements von der zweiten in die erste Lage, und/oder Einstellen eines ersten Beleuchtungszustands und/oder eines ersten Bilderfassungszustands, wenn sich der Arbeitsabstand verringert und einen zweiten vorbestimmten Schwellwert erreicht, der kleiner als der erste Schwellwert ist insbesondere aus einem Zustand mit eingestelltem zweiten Erfassungsbereich, aus einem eingestellten zweiten Beleuchtungszustand und/oder aus einem zweiten Bilderfassungszustand heraus.

Auch dies wurde mit entsprechenden Vorteilen vorhergehend beschrieben.

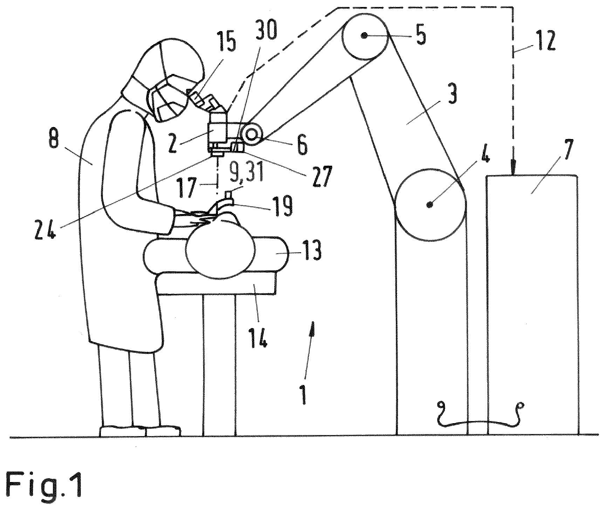

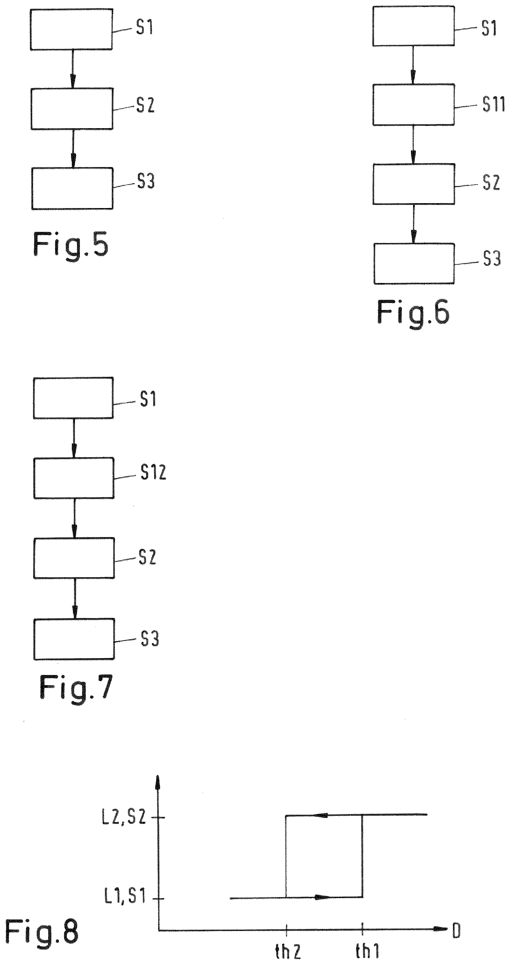

Die Erfindung wird anhand von Ausführungsbeispielen näher erläutert. Die Figuren zeigen:
- Fig. 1: eine schematische Ansicht eines erfindungsgemäßen Mikroskopiesystems in einer Ausführungsform,
- Fig. 2: einen schematischen Querschnitt durch einen Teil eines erfindungsgemäßen Mikroskopiesystems,
- Fig. 3: einen schematischen Querschnitt durch einen Teil eines erfindungsgemäßen Mikroskopiesystems in einer weiteren Ausführungsform,
- Fig. 4: einen schematischen Querschnitt durch einen Teil eines erfindungsgemäßen Mikroskopiesystems in einer weiteren Ausführungsform,
- Fig. 5: ein schematisches Flussdiagramm eines erfindungsgemäßen Verfahrens in einer ersten Ausführungsform,
- Fig. 6: ein schematisches Flussdiagramm eines erfindungsgemäßen Verfahrens in einer weiteren Ausführungsform,
- Fig. 7: ein schematisches Flussdiagramm eines erfindungsgemäßen Verfahrens in einer weiteren Ausführungsform,
- Fig. 8: eine schematisches Darstellung des Zusammenhangs zwischen Arbeitsabstand und Beleuchtungszustand/Bilderfassungszustand,
- Fig. 9: eine schematische Ansicht verschiedener Erfassungsbereiche.
Nachfolgend bezeichnen gleiche Bezugszeichen Elemente mit gleichen oder ähnlichen technischen Merkmalen. In Fig. 1 ist ein erfindungsgemäßes Mikroskopiesystem 1 bei einer Anwendung in einem Operationsumfeld dargestellt. Das Mikroskopiesystem 1 umfasst ein Operationsmikroskop 2, welches an einem Stativ 3 zur Halterung des Mikroskops 2 angeordnet ist, insbesondere an einem freien Ende des Stativs 3. Das Stativ 3 ermöglicht eine Bewegung des Mikroskops zur Veränderung der Lage, also der Position und/oder Orientierung des Mikroskops 2. Das dargestellte Stativ 3 stellt eine exemplarische kinematische Struktur zur Halterung und Bewegung des Mikroskops 2 dar. Dem Fachmann ist selbstverständlich bekannt, dass auch andere kinematische Strukturen verwendet werden können. Nicht dargestellte Antriebseinrichtungen des Stativs 3 können eine Drehbewegung von beweglichen Teilen des Stativs 3 um Drehachsen 4, 5, 6 ermöglichen. Weiter dargestellt ist eine Steuereinrichtung 7, die zur Steuerung der Antriebseinrichtungen dient. Weiter kann die Steuereinrichtung 7 auch zur Einstellung von Betriebs- und/oder Bewegungsparametern des Mikroskops 2 dienen, beispielsweise von einem Zoom des Mikroskops 2. Hierzu kann die Steuereinrichtung 7 signal- und/oder datentechnisch mit dem Mikroskop 2 und/oder mit den Antriebseinrichtungen verbunden sein. Weiter dargestellt ist ein Patient 13, der auf einem Operationstisch 14 liegt. Weiter dargestellt ist, dass das Mikroskop 2 ein Okular 15 umfasst, in welches der Benutzer 8 hineinschaut, um durch das Mikroskop 2 einen Teilbereich des Patienten 13 zu betrachten, insbesondere in vergrößernder Art und Weise. Dargestellt ist auch eine optische Achse 17 des Mikroskops 2. Das Mikroskopiesystem 1 umfasst weiter eine Lageerfassungseinrichtung zur Erfassung einer Lage eines Instruments 19, welches von einem Benutzer 8 gehalten und bewegt werden kann. Der Benutzer 8 kann beispielsweise ein Chirurg sein. Die Lageerfassungseinrichtung umfasst mindestens ein Target 9 mit mindestens einem Marker und mindestens eine Trackingkamera 30 zur Erfassung des Targets 9. Mittels der Lageerfassungseinrichtung kann eine Lage des Targets 9 bestimmt werden. In Fig. 1 ist dargestellt, dass das Target 9 an dem Instrument 19 befestigt ist, wobei dann aufgrund der ortsfesten Anordnung des Targets 9 an dem Instrument 19 auch die Lage des Instruments 19 bestimmt werden kann. Die Trackingkamera 30 ist in einem Mikroskopkörper 24 des Mikroskops 2 angeordnet, insbesondere in einem Gehäuse des Mikroskopkörpers 24. Ein Erfassungsbereich EB (siehe Fig. 7a) der Trackingkamera 30 überlappt hierbei zumindest teilweise mit einem Erfassungsbereich des Mikroskops 2 zur vergrößerten Darstellung des Patienten oder Körperbereichen des Patienten 13. Weiter dargestellt ist eine signal- und/oder datentechnische Verbindung 12 zwischen der Trackingkamera 30 und der Steuereinrichtung 7. Mittels der Steuereinrichtung 7 oder mittels einer nicht dargestellten Auswerteeinrichtung, die beispielsweise Teil der Lageerfassungseinrichtung sein kann, kann eine Relativlage zwischen Target 9 und Trackingkamera 30 in einem dreidimensionalen Koordinatensystem der Lageerfassungseinrichtung bestimmt werden. So kann z.B. die Lage des Targets 9 in einem zweidimensionalen Bildkoordinatensystem der Trackingkamera 30 bestimmt werden und in Abhängigkeit dieser Lage dann eine Lage in dem Koordinatensystem der Lageerfassungseinrichtung. Hierbei kann sowohl eine Position als auch eine Orientierung in dem dreidimensionalen Koordinatensystem der Lageerfassungseinrichtung bestimmt werden. Diese Lage kann dann über eine bekannte, beispielsweise durch eine Registrierung bestimmte, Transformation in das Referenzkoordinatensystem umgerechnet werden. Die Bestimmung der Lage des Targets 9 kann durch Auswertung genau eines zweidimensionalen Abbilds der Trackingkamera 30 erfolgen.

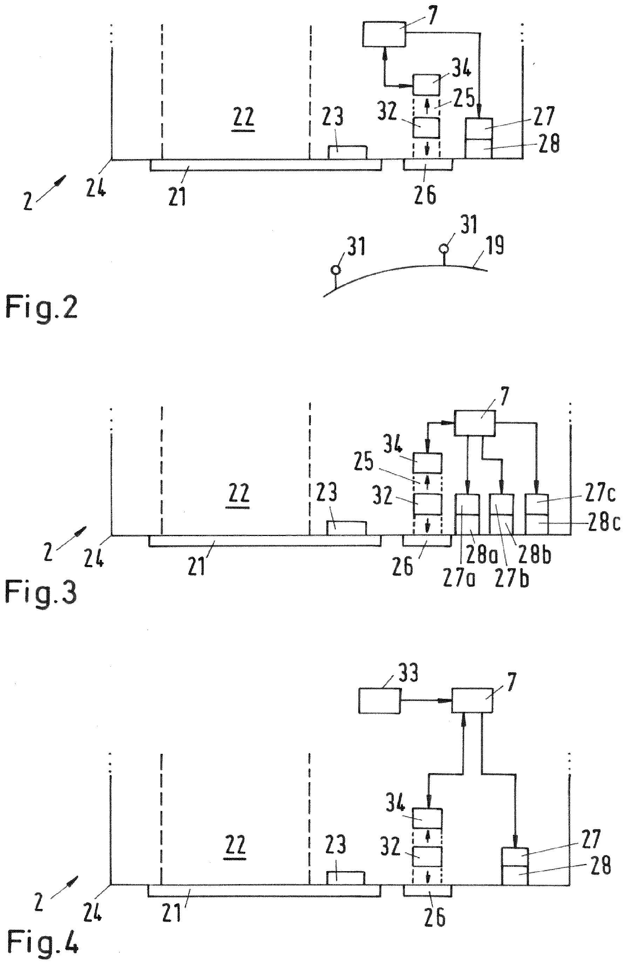

Fig. 2 zeigt einen schematischen Querschnitt durch einen Teil eines erfindungsgemäßen Mikroskopiesystems. Dargestellt ist ein Abschlussglas 21 des Mikroskops 2, welches zwischen einem Strahlengang 22 zur Erzeugung des mikroskopischen Abbilds und einem Außenbereich, beispielsweise dem Raum mit dem Patienten 13, angeordnet ist. Das Abschlussglas 21 kann transparent für Strahlung zumindest im sichtbaren Wellenlängenbereich sein, schützt jedoch den Strahlengang 22 zur Erzeugung des mikroskopischen Abbilds vor Verschmutzung. Weiter dargestellt ist eine Sichtfeldbeleuchtungseinrichtung 23, die, wie auch der Strahlengang 22, in einen Mikroskopkörper 24 des Mikroskops 2 integriert ist. Hierbei deckt das Abschlussglas 21 sowohl den Strahlengang 22 als auch die Sichtfeldbeleuchtungseinrichtung 23 ab. Weiter dargestellt ist ein Strahlengang 25 zur Erzeugung des Trackingabbilds. Dieser Strahlengang 25 wird ebenfalls vom Mikroskopkörper 24 ausgebildet, ist aber vom Strahlengang 22 zur Erzeugung des mikroskopischen Abbilds verschieden, insbesondere durch Wandelemente getrennt. Weiter dargestellt ist ein Abschlussglas 26, das zwischen dem Strahlengang 25 und der äußeren Umgebung angeordnet ist. Das Abschlussglas 26 kann transparent für Licht zumindest im nahen Infrarotbereich und von dem Abschlussglas 21 verschieden sein. Ferner dargestellt ist eine Trackingbeleuchtungseinrichtung 27, die ebenfalls in den Mikroskopkörper 24 des Mikroskops 2 integriert ist und beispielsweise als LED ausgebildet sein kann. Die Trackingbeleuchtungseinrichtung 27 ist von der Sichtfeldbeleuchtungseinrichtung 23 verschieden. Die Trackingbeleuchtungseinrichtung 27 kann Licht im nahen Infrarotbereich erzeugen. Zwischen der Trackingbeleuchtungseinrichtungen 27 und der äußeren Umgebung ist ein Linsenelement 28 angeordnet. Das Linsenelement 28 kann ein in seiner Form und/oder Lage veränderbares Linsenelement sein, wobei eine Veränderung der Form und/oder Lage zur Einstellung verschiedener Beleuchtungszustände dienen kann. Die Form und/oder Lage kann durch die Steuereinrichtung 7 einstellbar sein. Allerdings ist es nicht zwingend, dass das Linsenelement 28 in seiner Form und/oder Lage veränderbare ist.

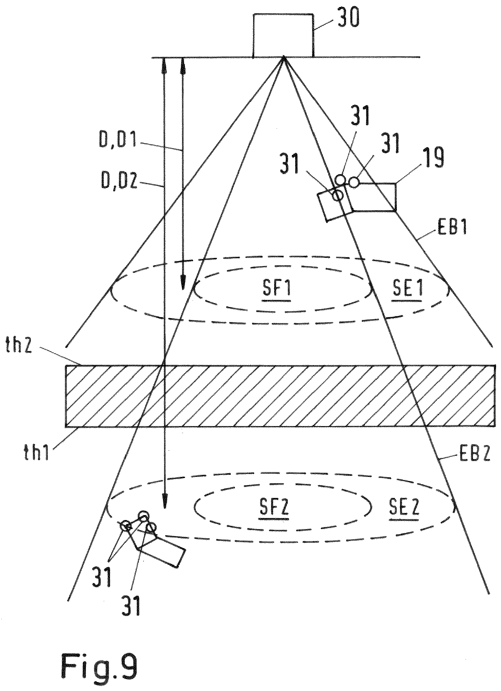

Weiter dargestellt ist eine Trackingkamera 30 (siehe Fig. 1), die einen Bildsensor 34 zur Erzeugung eines, insbesondere zweidimensionalen, Abbilds, ein bewegliches optisches Element 32 und ein Abschlussglas 26 umfasst. Ebenfalls dargestellt ist eine Steuereinrichtung 7, die zur Steuerung des z.B. als Linse ausgebildeten beweglichen optischen Elements 32 dient. Hierzu kann die Steuereinrichtung 7 über eine Signalverbindung mit einer Antriebseinrichtung zur Erzeugung einer die Bewegung verursachenden Antriebskraft (nicht dargestellt) verbunden sein. Hierbei ist dargestellt, dass das optische Element 32 mit einer Translationsbewegung in einem Strahlengang 25 zur Erzeugung des Trackingabbilds bewegt werden kann, insbesondere parallel zu einer Mittelachse des Strahlengangs. Hierbei ist vorstellbar, dass das optische Element 32 zwischen zwei Endanschlägen bewegt werden kann, insbesondere mit einer Linearbewegung. Durch die Bewegung des beweglichen optischen Elements 32 kann ein Erfassungsbereich EB1, EB2 (siehe z.B. Fig. 9) der Trackingkamera 30 verändert werden, insbesondere ein Erfassungswinkel EW1, EW2 des Erfassungsbereichs EB. Es ist weiter möglich, dass das in Fig. 2 dargestellte Mikroskopiesystem 1 genau eine oder mehrere Trackingbeleuchtungseinrichtung(en) 27 umfasst. Ein Betrieb der Trackingbeleuchtungseinrichtung 27 kann durch die Steuereinrichtung 7 steuerbar sein, insbesondere ein Aktivierungszustand und/oder eine Intensität der von der Trackingbeleuchtungseinrichtung 27 im aktivierten Zustand erzeugten Strahlung. Mittels der Steuereinrichtung 7, die auch die Funktion einer Auswerteeinrichtung bereitstellen kann, kann eine Beleuchtungsinformation durch Auswertung mindestens eines Abbilds der Trackingkamera 30 bestimmt werden, z.B. ein Helligkeitswert des erzeugten Abbilds oder von Helligkeitswerten in einem oder mehreren Teilbereichen des Abbilds. Mittels der Steuereinrichtung 7 kann alternativ oder kumulativ eine Lageinformation des Objekts, also eine Information über die Lage eines Markers 31 relativ zu einer Beleuchtungseinrichtung, vorzugsweise relativ zur Sichtfeldbeleuchtungseinrichtung 23, bestimmt werden. Weiter kann mittels der Steuereinrichtung 7 die Beleuchtung durch die Trackingsbeleuchtungseinrichtungen 27 und/oder die Bilderfassung durch die mindestens eine Trackingkamera 30 in Abhängigkeit der Beleuchtungsinformation und/oder der Lageinformation des Objekts eingestellt werden. Mit anderen Worten kann ein Beleuchtungszustand und/oder ein Bilderfassungszustand eingestellt werden, wobei die Einstellung eines Beleuchtungszustand z.B. durch die Einstellung mindestens eines Beleuchtungsparameter und/oder die Einstellung eines Bilderfassungszustands durch die Einstellung mindestens eines Bilderfassungsparameters, z.B. der Belichtungszeit, erfolgen kann und sich verschiedene Zustände sich in dem Wert mindestens eines Parameters unterscheiden können.

Fig. 3 zeigt einen schematischen Querschnitt durch einen Teil eines erfindungsgemäßen Mikroskopiesystems 2 in einer weiteren Ausführungsform. Im Unterschied zur der in Fig. 2 dargestellten Ausführungsform umfasst das in Fig. 3 dargestellte Mikroskopiesystem 2 mehrere Trackingbeleuchtungseinrichtungen 27a, 27b, 27c und mehrere Linsenelemente 28a, 28b, 28c. Die Linsenelemente 28a, 28b, 28c können voneinander verschiedene optische Eigenschaften, insbesondere voneinander verschiedene Brennweiten, aufweisen. Hierbei strahlt die von der Trackingbeleuchtungseinrichtung 27a, 27b, 27c erzeugte Strahlung durch das dieser Trackingbeleuchtungseinrichtung 27a, 27b, 27c zugeordnete Linsenelement 28a, 28b, 28c. Die Linsenelemente 28a, 28b, 28c können von einem Linsenverbundelement 29 ausgebildet werden, wobei dieses Linsenverbundelement 29 verschiedene Abschnitte umfasst, die die Linsenelemente 28a, 28b, 28c ausbilden. Mittels der Steuereinrichtung 7 können die Trackingbeleuchtungseinrichtungen 27a, 27b, 27c unabhängig voneinander zur Einstellung der Beleuchtung angesteuert werden. Auch können die Linsenelemente 28a, 28b, 28c unabhängig voneinander zur Einstellung der Beleuchtung angesteuert werden, wenn z.B. deren Form und/oder Lage veränderbar ist. Es ist auch möglich, dass das Mikroskopiesystem 1 Gruppen von mehreren Trackingbeleuchtungseinrichtungen 27 umfasst, wobei die Trackingbeleuchtungseinrichtungen 27 als LED ausgebildet sein oder eine solche umfassen können. Eine Gruppe ein oder mehrere sogenannte(s) LED-Array(s) umfassen, wobei jede der Trackingbeleuchtungseinrichtungen 27 jeder Gruppe individuell angesteuert werden kann, Verschiedene Linsenelemente 28a, 28b, 28c können verschiedenen Gruppen zugeordnet sein.

Fig. 4 zeigt einen schematischen Querschnitt durch einen Teil eines erfindungsgemäßen Mikroskopiesystems 2 in einer weiteren Ausführungsform. Im Unterschied zur der in Fig. 2 dargestellten Ausführungsform umfasst das in Fig. 3 dargestellte Mikroskopiesystem 2 eine Einrichtung 33 zur Bestimmung eines Arbeitsabstands D (siehe Fig. 9). Diese ist zur Informationsübertragung mit der Steuereinrichtung 7 verbunden. Mittels der Steuereinrichtung 7 kann dann die Beleuchtung und/oder die Bilderfassung zusätzlich in Abhängigkeit des Arbeitsabstands D eingestellt werden. Zusätzlich kann auch die Lage des beweglichen optischen Elements 32 in Abhängigkeit des Arbeitsabstands D eingestellt werden.

Fig. 5 zeigt ein schematisches Flussdiagramm eines erfindungsgemäßen Verfahrens in einer ersten Ausführungsform. In einem ersten Schritt S1 wird durch eine Trackingkamera (siehe z.B. Fig. 2) ein Abbild erzeugt. In einem zweiten Schritt S2 wird dann dieses Abbild, insbesondere mit einer Auswerteeinrichtung, z.B. der in Fig. 2 dargestellten Steuereinrichtung 7, ausgewertet und - wie vorhergehend erläutert - eine Beleuchtungsinformation und/oder Lageinformation des Objekts bestimmt. In einem dritten Schritt S3 wird, beispielsweise ebenfalls mittels der Steuereinrichtung 7, eine Beleuchtung durch die Trackingsbeleuchtungseinrichtung 27 und/oder die Bilderfassung durch die mindestens eine Trackingkamera 30 in Abhängigkeit der Beleuchtungsinformation und/oder der Lageinformation des Objekts eingestellt. Die Beleuchtung kann durch Ansteuerung der Trackingbeleuchtungseinrichtung(en) 27 und/oder des/der Linsenelement(e) 28 erfolgen. Beispielhafte Einstellungen der Beleuchtung und/oder der Bilderfassung in Abhängigkeit der Beleuchtungsinformation und/oder der Lageinformation des Objekts wurden vorhergehend erläutert.

Fig. 6 zeigt ein schematisches Flussdiagramm eines erfindungsgemäßen Verfahrens in einer weiteren Ausführungsform. Im Unterschied zu der in Fig. 5 dargestellten Ausführungsform umfasst das Verfahren einen Schritt S11 zur Bestimmung eines Arbeitsabstands D. In dem dritten Schritt S3 kann dann die Beleuchtung durch die Trackingsbeleuchtungseinrichtung 27 und/oder die Bilderfassung durch die mindestens eine Trackingkamera 30 zusätzlich in Abhängigkeit des Arbeitsabstands D eingestellt werden. Weiter kann im dritten Schritt S3 die Lage mindestens eines optischen Element 32 (siehe Fig. 2) in Abhängigkeit des Arbeitsabstands eingestellt werden.

Fig. 7 zeigt ein schematisches Flussdiagramm eines erfindungsgemäßen Verfahrens in einer weiteren Ausführungsform. Im Unterschied zu der in Fig. 5 dargestellten Ausführungsform umfasst das Verfahren einen Schritt S12 zur Identifizierung von Teilbereichen, in denen Marker 31 abgebildet sind (siehe Fig. 2). In dem zweiten Schritt S2 wird dann dieser Teilbereich des Abbilds ausgewertet und - wie vorhergehend erläutert - eine Beleuchtungsinformation für diese Teilbereiche bestimmt. In einem dritten Schritt S3 wird, beispielsweise ebenfalls mittels der Steuereinrichtung 7, eine Beleuchtung durch die Trackingsbeleuchtungseinrichtung 27 und/oder die Bilderfassung durch die mindestens eine Trackingkamera 30 in Abhängigkeit der Beleuchtungsinformation eingestellt, insbesondere derart, dass die Marker 31 nach der Einstellung mit einer vorbestimmten Helligkeit abgebildet werden.

Fig. 8 zeigt eine schematische Darstellung des Zusammenhangs zwischen einem Arbeitsabstand D und Beleuchtungszuständen S1, S2 sowie Erfassungszuständen, wobei in einem ersten Erfassungszustand eine erste Lage L1 eines optisches Elements 32 zur Einstellung eines Erfassungsbereichs EB der Trackingkamera 30 und in einem zweiten Erfassungszustand eine zweite Lage L2 des optisches Elements 32 eingestellt ist. Es ist dargestellt, dass das optische Element 32 von der ersten in die zweite Lage L1, L2 bewegt und ein zweiter Beleuchtungszustand S1 eingestellt wird, wenn sich der Arbeitsabstand D vergrößert und einen ersten vorbestimmten Schwellwert th1 erreicht bzw. überschreitet. Weiter wird das bewegliche optischen Element 32 aus dieser zweiten Lage L2 in die erste Lage L1 bewegt und/oder aus diesem zweiten Beleuchtungszustand S2 bzw. Bilderfassungszustand ein erster Beleuchtungszustand S1 und/oder ein erster Bilderfassungszustand eingestellt, wenn sich der Arbeitsabstand D verringert und einen zweiten vorbestimmten Schwellwert th2 erreicht bzw. unterschreitet, der kleiner als der erste Schwellwert th1 ist.

Fig. 9 eine schematische Ansicht verschiedener Erfassungsbereiche EB1, EB2, die für verschiedene Arbeitsabstände D1, D2 eingestellt werden. Weiter dargestellt ist die Trackingkamera 30, wobei diese ein bewegliches optisches Element 32, dessen Lage zur Einstellung eines Erfassungsbereichs EB der Trackingkamera 30 veränderbar ist, umfassen kann. Aber auch andere Möglichkeiten der Einstellung verschiedene Erfassungsbereiche EB1, EB2 sind vorstellbar. Für einen ersten Arbeitsabstand D1 zwischen einer ersten Schärfeebene SE1, in der z.B. ein erster Zielbereich (area of interest) mit einem ersten Operationsfeld SF angeordnet sein kann, und einem Abschlusselement eines Objektivsystems des Mikroskops entlang einer optischen Achse des Mikroskops, wird z.B. ein erster Erfassungsbereich EB1 eingestellt. Diese Einstellung ermöglich eine zuverlässige Erfassung eines Instruments 19 mit Markern 31, das sich in der Umgebung des ersten Operationsfelds SF1 befindet., Für einen zweiten, größeren Arbeitsabstand D2 zwischen einer weiteren Schärfeebene SE2, in der z.B. ein weiterer Zielbereich mit einem weiteren Operationsfeld SF2 angeordnet sein kann, und dem Abschlusselement wird z.B. ein zweiter Erfassungsbereich EB2 mit einem kleineren Erfassungswinkel als dem Erfassungswinkel des ersten Erfassungsbereichs EB1 eingestellt. Hierdurch kann eine ausreichend hohe Auflösung und somit qualitativ hochwertige Abbildung von z.B. Markern 31 gewährleistet werden, die sich in der Umgebung des weiteren Operationsfeld SF2 befinden. Durch einen schraffierten Kasten ist ein Bereich von Arbeitsabständen D gekennzeichnet, für die der erste oder der weitere Erfassungsbereich EB1, EB2 eingestellt werden können, wobei die Einstellung des ersten oder weiteren Erfassungsbereichs EB1, EB2 bei einer Veränderung des Arbeitsabstands D auf einen Wert aus diesem Bereich abhängig von dem Ausgangswert des Arbeitsabstands D vor der Veränderung ist.

### Bezugszeichenliste

- 1: Mikroskopiesystem
- 2: Mikroskop
- 3: Stativ
- 4, 5, 6: Drehachsen
- 7: Steuereinrichtung
- 8: Benutzer
- 9: Target
- 12: Signalverbindung
- 13: Patient
- 14: Operationstisch
- 15: Okular
- 17: optische Achse
- 19: Instrument
- 21: Abschlussglas
- 22: Strahlengang für mikroskopischen Abbildung
- 23: Sichtfeldbeleuchtungseinrichtung
- 24: Mikroskopkörper
- 25: Strahlengang für die Trackingabbilderzeugung
- 26: Abschlussglas
- 27, 27a, 27b, 27c: Trackingbeleuchtungseinrichtung
- 28a, 28b, 28c: Linsenelement
- 29: Linsenverbundelement
- 30: Trackingkamera
- 31: Marker
- 32: bewegliches optisches Element
- 33: Einrichtung zur Bestimmung eines Arbeitsabstands
- 34: Bildsensor
- EB1, EB2: Erfassungsbereich
- D, D1, D2: Arbeitsabstand
- S1, S2, S3, S11, S12: Schritt
- th1, th2: Schwellwert
- L1, L2: Lage
- S1, S2 -: Beleuchtungzustand

## Patentansprüche

1. Mikroskopiesystem, umfassend mindestens eine Trackingkamera (30) zur Lageerfassung mindestens eines zu erfassenden Objekts, wobei das Mikroskopiesystem (1) weiter umfasst:
- mindestens eine Trackingbeleuchtungseinrichtung (27, 27a, 27b, 27c),
- mindestens eine Steuereinrichtung (7) zur Steuerung der mindestens einen Trackingbeleuchtungseinrichtung (27, 27a, 27b, 27c) und/oder der Trackingkamera (30),
**dadurch gekennzeichnet, dass** eine Beleuchtungsinformation durch Auswertung mindestens eines Abbilds der Trackingkamera (30) und/oder eine Lageinformation des Objekts relativ zu mindestens einer Beleuchtungseinrichtung (30, 32) und/oder ein Arbeitsabstand (D, D1, D2) bestimmbar ist, wobei die Beleuchtung durch die Trackingbeleuchtungseinrichtung (27, 27a, 27b, 27c) und/oder eine Bilderfassung durch die mindestens eine Trackingkamera (30) in Abhängigkeit der Beleuchtungsinformation und/oder in Abhängigkeit der Lageinformation des Objekts und/oder in Abhängigkeit des Arbeitsabstands (D, D1, D2) einstellbar ist.

2. Mikroskopiesystem nach Anspruch 1, **dadurch gekennzeichnet, dass** durch Auswertung des mindestens einen Abbilds eine Überbelichtung und/oder eine Unterbelichtung des Abbilds oder eines Teilbereichs des Abbilds detektierbar ist, wobei die Beleuchtung und/oder die Bilderfassung derart einstellbar ist, dass die Überbelichtung und/oder die Unterbelichtung reduziert wird.

3. Mikroskopiesystem nach einem der vorangegangenen Ansprüche, **dadurch gekennzeichnet, dass** durch Auswertung des mindestens einen Abbilds mindestens ein Teilbereich identifizierbar ist, in dem das zu erfassende Objekt abgebildet ist, wobei die Beleuchtung und/oder die Bilderfassung derart einstellbar ist, dass das zu erfassende Objekt mit einer vorbestimmten Helligkeit abgebildet wird.

4. Mikroskopiesystem nach einem der vorangegangenen Ansprüche, **dadurch gekennzeichnet, dass** die Lageinformation des Objektes eine Information über die Lage des zu erfassenden Objekts relativ zu mindestens einer Sichtfeldbeleuchtungseinrichtung (32) mit einer vorbekannten Intensitätsverteilung in ihrem Beleuchtungsbereich ist, wobei die Beleuchtung und/oder die Bilderfassung zusätzlich in Abhängigkeit einer von der Sichtfeldbeleuchtungseinrichtung (32) erzeugten lagespezifischen Intensität einstellbar ist.

5. Mikroskopiesystem nach einem der vorangegangenen Ansprüche, **dadurch gekennzeichnet, dass** räumliche Bereiche, die in verschiedene Teilbereiche des Abbilds abgebildet werden, verschieden beleuchtet werden.

6. Mikroskopiesystem nach einem der vorangegangenen Ansprüche, **dadurch gekennzeichnet, dass** verschiedene räumliche Bereiche, in denen verschiedene zu erfassende Objekte angeordnet sind und die in verschiedene Teilbereiche des Abbilds abgebildet werden, derart beleuchtet werden, dass jedes Objekt mit einer vorbestimmten Helligkeit abgebildet wird.

7. Mikroskopiesystem nach einem der Ansprüche 4 bis 6, **dadurch gekennzeichnet, dass** räumliche Bereiche, die in verschiedene Teilbereiche des Abbilds abgebildet werden, derart verschieden beleuchtet werden, dass die Differenz zwischen der in einem ersten räumlichen Bereich erzeugten resultierenden Intensität und der in einem weiteren räumlichen Bereich erzeugten resultierenden Intensität im Vergleich zu einer Differenz zwischen der von der Sichtfeldbeleuchtungseinrichtung (32) im ersten räumlichen Bereich erzeugten Intensität und der von der Sichtfeldbeleuchtungseinrichtung (32) im weiteren räumlichen Bereich erzeugten Intensität reduziert wird.

8. Mikroskopiesystem nach einem der vorangegangenen Ansprüche, **dadurch gekennzeichnet, dass** das Mikroskopiesystem (1) mindestens ein bewegliches optisches Element (32), dessen Lage zur Einstellung eines Erfassungsbereichs (EB1, EB2) der Trackingkamera (30) veränderbar ist, umfasst, wobei die Lage des beweglichen optischen Elements (32) in Abhängigkeit des Arbeitsabstands (D, D1, D2) einstellbar ist.

9. Mikroskopiesystem nach einem der vorangegangenen Ansprüche, **dadurch gekennzeichnet, dass** ein zweiter Erfassungsbereich (EB2) der Trackingkamera (30) und/oder ein zweiter Beleuchtungszustand (S2) und/oder ein zweiter Bilderfassungszustand eingestellt wird, wenn sich der Arbeitsabstand (D) vergrößert und einen ersten vorbestimmten Schwellwert (th1) erreicht, wobei ein erster Erfassungsbereich (EB1) und/oder ein erster Beleuchtungszustand (S1) und/oder ein erster Bilderfassungszustand eingestellt wird, wenn sich der Arbeitsabstand (D) verringert und einen zweiten vorbestimmten Schwellwert (th2) erreicht, der kleiner als der erste Schwellwert (th1) ist.

10. Mikroskopiesystem nach einem der Ansprüche 8 oder 9, **dadurch gekennzeichnet, dass** genau zwei Lagen (L1, L2) des beweglichen optischen Elements (32) wiederholgenau einstellbar sind.

11. Mikroskopiesystem nach einem der Ansprüche 8 bis 10, **dadurch gekennzeichnet, dass** das bewegliche optische Element (32) beweglich zwischen zwei Endanschlagelementen gelagert ist, wobei ein erstes Endanschlagelement ein erstes Lagerelement zur statischen Lagerung und ein weiteres Endanschlagelement ein weiteres Lagerelement zur statischen Lagerung aufweist oder ausbildet, wobei die Lagerelemente die Anschlaglagen des optischen Elements wiederholgenau festlegen.

12. Mikroskopiesystem nach einem der vorangegangenen Ansprüche, **dadurch gekennzeichnet, dass** für einen ersten Arbeitsabstand (D1) ein erster Erfassungswinkel (EW1) der Trackingkamera (30) und für mindestens einen weiteren Arbeitsabstand (D2) ein weiterer Erfassungswinkel (EW2) der Trackingkamera (30) eingestellt wird, wobei der erste Arbeitsabstand (D1) kleiner als der weitere Arbeitsabstand (D2) ist und der erste Erfassungswinkel (EW1) größer als der weitere Erfassungswinkel (EW2) ist.

13. Mikroskopiesystem nach einem der vorangegangenen Ansprüche, **dadurch gekennzeichnet, dass** das Mikroskopiesystem (1) mehrere Gruppen von Trackingbeleuchtungseinrichtungen (27, 27a, 27b, 27c) umfasst, wobei eine Gruppe mindestens eine Trackingbeleuchtungseinrichtung (27, 27a, 27b, 27c) umfasst, wobei das Mikroskopiesystem (1) mindestens zwei optische Elemente zur Strahlführung umfasst, die verschiedenen Gruppen zugeordnet sind.

14. Verfahren zum Betreiben eines Mikroskopiesystems (1) nach einem der Ansprüche 1 bis 13, umfassend:
- das Bestimmen einer Beleuchtungsinformation durch Auswertung mindestens eines Abbilds der Trackingkamera (30) und/oder einer Lageinformation des Objekts relativ zu mindestens einer Beleuchtungseinrichtung (30, 32) und/oder eines Arbeitsabstands (D, D1, D2),
- das Einstellen einer Beleuchtung durch die Trackingsbeleuchtungseinrichtung (27) und/oder einer Bilderfassung durch die mindestens eine Trackingkamera (30) in Abhängigkeit der Beleuchtungsinformation und/oder in Abhängigkeit der Lageinformation des Objekts und/oder in Abhängigkeit des Arbeitsabstands (D, D1, D2).

15. Verfahren nach Anspruch 14, **dadurch gekennzeichnet, dass** das Verfahren umfasst:
- Einstellen eines zweiten Erfassungsbereichs (EB2) und/oder Einstellen eines zweiten Beleuchtungszustands (S2) und/oder eines zweiten Bilderfassungszustands, wenn sich der Arbeitsabstand (D, D1, D2) vergrößert und einen ersten vorbestimmten Schwellwert (th1) erreicht,
- Einstellen eines ersten Erfassungsbereichs (EB1) und/oder Einstellen eines ersten Beleuchtungszustands (S1) und/oder eines ersten Bilderfassungszustands, wenn sich der Arbeitsabstand (D, D1, D2) verringert und einen zweiten vorbestimmten Schwellwert (th2) erreicht, der kleiner als der erste Schwellwert (th1) ist.
